# EUROPEAN PATENT SPECIFICATION

(11) **EP 4 438 209 B1**
(45) Date of publication and mention of the grant of the patent: **08.10.2025**
(21) Application number: 23315066.3
(22) Date of filing: 28.03.2023
(51) Int. Cl.: B23C 5/10, B23C 5/22

(54) **DOUBLE-SIDED CUTTING INSERT AND HELICAL MILLING CUTTER**
DOPPELSEITIGER SCHNEIDEINSATZ UND SPIRALFÖRMIGER FRÄSER
INSERT DE COUPE DOUBLE FACE ET FRAISE HÉLICOÏDALE

(43) Date of publication of application: 02.10.2024
(73) Proprietor: Seco Tools AB, 737 82 Fagersta (SE)
(72) Inventor: Vincent, Mathieu, 18000 Bourges (FR); Bonenfant, Antoine, 18000 Bourges (FR); Auzenat, François, 18000 Bourges (FR); Delorme, Anthony, 18000 Bourges (FR)
(74) Representative: Sandvik

(56) References cited:
- US-A1- 2020 306 844
- US-B2- 10 556 278
- US-B2- 9 776 259

## Description

### FIELD OF THE INVENTION AND PRIOR ART

The present invention relates to a double-sided cutting insert according to the preamble of claim 1 for use in a helical milling cutter. The invention also relates to a helical milling cutter comprising a plurality of such double-sided cutting inserts.

A helical milling cutter is a rotating cutting tool, which may be provided with one or more cutting inserts detachably mounted in a respective insert seat in a tool body of the helical milling cutter. One previously known type of helical milling cutter comprises two or more chip flutes formed in a peripheral surface of the tool body and extending alongside of each other in a respective helically curved path, wherein each chip flute has a leading face and an opposed trailing face with the leading face located in front of the trailing face as seen in the intended direction of rotation of the tool body and wherein each chip flute is provided with an array of insert seats located one after the other along the trailing face of the chip flute such that the insert seats in the same array of insert seats are spaced from each other in a circumferential direction of the tool body in a stepped manner.

A helical milling cutter of the above-mentioned type is for instance disclosed in US 5 913 644 A. In the helical milling cutter according to US.5 913 644 A, the insert seats in each separate array of insert seats are so positioned in relation to each other that a rearwardly facing end section of a cutting insert mounted in an insert seat that is located axially forwardly of an adjacent insert seat in the same array of insert seats partly overlaps a forwardly facing end section of a cutting insert mounted in this adjacent insert seat. In this case, cutting edges on the cutting inserts in one and the same array of insert seats are arranged to jointly form a long cutting line of stepped configuration. A problem with this arrangement of the cutting inserts is that the free space between the overlapping rearwardly facing end section of a first cutting insert and the overlapped forwardly facing end section of an adjacent second cutting insert in the same array of insert seats may be very restricted to the detriment of the chip formation and chip evacuation.

### OBJECT OF THE INVENTION

The object of the present invention is to provide a double-sided cutting insert that has a new and favourable design and that is suitable for use in a helical milling cutter of the above-mentioned type.

### SUMMARY OF THE INVENTION

According to the invention, said object is achieved by means of a double-sided negative cutting insert having the features defined in claim 1.

The double-sided cutting insert according to the present invention is turnable into four different working positions and comprises:
- first and second major faces arranged on opposite sides of the cutting insert and serving as top and bottom faces of the cutting insert, i.e. serving as rake faces comprising rake surfaces, the cutting insert having a centre axis that extends between the first and second major faces and a median plan that extends halfway between the first and second major faces perpendicularly to the centre axis, wherein the cutting insert has an essentially rectangular basic shape when seen in a direction along the centre axis, and wherein each one of said first and second major faces comprises an abutment surface that is configured to serve as a tangential abutment surface of the cutting insert in two of said working positions of the cutting insert and abut against a corresponding tangential support surface in an insert seat in a tool body of a helical milling cutter when the cutting insert is mounted in the insert seat in any of these two working positions;
- a peripheral surface extending around the cutting insert between the first and second major faces and comprising:
   - a first main side face and a second main side face arranged opposite to each other on two opposite long sides of the cutting insert,
   - a third main side face and a fourth main side face arranged opposite to each other on two opposite short sides of the cutting insert,
   - a first corner side face arranged between the first and fourth main side faces,
   - a second corner side face arranged between the first and third main side faces,
   - a third corner side face arranged between the second and third main side faces, and
   - a fourth corner side face arranged between the second and fourth main side faces;
- a curved first corner cutting edge formed at an intersection between the first corner side face and the first major face;
- a curved second corner cutting edge formed at an intersection between the second corner side face and the first major face;
- a curved third corner cutting edge formed at an intersection between the third corner side face and the first major face;
- a curved fourth corner cutting edge formed at an intersection between the fourth corner side face and the first major face;
- a curved fifth corner cutting edge formed at an intersection between the second corner side face and the second major face;
- a curved sixth corner cutting edge formed at an intersection between the first corner side face and the second major face;
- a curved seventh corner cutting edge formed at an intersection between the fourth corner side face and the second major face;
- a curved eighth corner cutting edge formed at an intersection between the third corner side face and the second major face;
- a first main cutting edge formed at an intersection between the first major face and the first main side face, the first main cutting edge extending between the first and second corner cutting edges;
- a second main cutting edge formed at an intersection between the first major face and the second main side face, the second main cutting edge extending between the third and fourth corner cutting edges;
- a third main cutting edge formed at an intersection between the second major face and the first main side face, the third main cutting edge extending between the fifth and sixth corner cutting edges;
- a fourth main cutting edge formed at an intersection between the second major face and the second main side face, the fourth main cutting edge extending between the seventh and eighth corner cutting edges;
- an inclined first chip guiding surface extending between the first major face and the third main side face and located between the second corner side face and the third corner side face, the first chip guiding surface having a first edge that forms a boundary between the first chip guiding surface and the first major face and a second edge that forms a boundary between the first chip guiding surface and the third main side face, wherein the first chip guiding surface is bounded by these first and second edges and the first edge meets the second edge at a first end of the first chip guiding surface facing the second corner cutting edge and also at a second end of the first chip guiding surface facing the third corner cutting edge;
- an inclined second chip guiding surface extending between the first major face and the fourth main side face and located between the first corner side face and the fourth corner side face, the second chip guiding surface having a first edge that forms a boundary between the second chip guiding surface and the first major face and a second edge that forms a boundary between the second chip guiding surface and the fourth main side face, wherein the second chip guiding surface is bounded by these first and second edges and the first edge meets the second edge at a first end of the second chip guiding surface facing the fourth corner cutting edge and also at a second end of the second chip guiding surface facing the first corner cutting edge;
- an inclined third chip guiding surface extending between the second major face and the fourth main side face and located between the first corner side face and the fourth corner side face, the third chip guiding surface having a first edge that forms a boundary between the third chip guiding surface and the second major face and a second edge that forms a boundary between the third chip guiding surface and the fourth main side face, wherein the third chip guiding surface is bounded by these first and second edges and the first edge meets the second edge at a first end of the third chip guiding surface facing the sixth corner cutting edge and also at a second end of the third chip guiding surface facing the seventh corner cutting edge; and
- an inclined fourth chip guiding surface extending between the second major face and the third main side face and located between the second corner side face and the third corner side face, the fourth chip guiding surface having a first edge that forms a boundary between the fourth chip guiding surface and the second major face and a second edge that forms a boundary between the fourth chip guiding surface and the third main side face, wherein the fourth chip guiding surface is bounded by these first and second edges and the first edge meets the second edge at a first end of the fourth chip guiding surface facing the eighth corner cutting edge and also at a second end of the fourth chip guiding surface facing the fifth corner cutting edge.

Each one of the first and second chip guiding surfaces intersects said abutment surface of the first major face on both sides of a longitudinal plane of the cutting insert that extends halfway between the first and second main side faces perpendicularly to the median plane and that contains the centre axis. In the corresponding manner, each one of the third and fourth chip guiding surfaces intersects said abutment surface of the second major face on both sides of said longitudinal plane.

Furthermore, the cutting insert has a transverse plane that extends halfway between the third and fourth main side faces perpendicularly to the median plane and perpendicularly to the longitudinal plane and that contains the centre axis, wherein each chip guiding surface of said first, second, third and fourth chip guiding surfaces has such an inclination in relation to the transverse plane that the first edge of the chip guiding surface is located closer to the transverse plane than the second edge of the same chip guiding surface as seen in the longitudinal plane and as seen in any plane that extends across the chip guiding surface and is parallel to the longitudinal plane.

In each working position of the double-sided cutting insert, when properly mounted in an insert seat in a helical milling cutter, there are two chip guiding surfaces at the rearwardly facing end section of the cutting insert, wherein one of these chip guiding surfaces is facing the leading face of the associated chip flute and the other one of these chip guiding surfaces is facing away from the leading face of the associated chip flute.

When two double-sided cutting inserts with such chip guiding surfaces are arranged adjacent to each other in one and the same array of insert seats of a helical milling cutter in the manner described above with reference to US 5 913 644 A, one of the two chip guiding surfaces at the rearwardly facing end section of the cutting insert located axially in front of the other cutting insert will provide increased free space between the mutually overlapping end sections of the two cutting inserts and will thereby facilitate the chip formation and chip evacuation during machining. Said one of the two chip guiding surfaces is the one that faces away from the leading face of the chip flute. It has been observed that the guiding of the chips by the chip guiding surfaces of the cutting inserts during a generation of the chips results in a reduction of the damage to the inactive corner and main cutting edges of the cutting inserts, and also in a reduction of the erosion of the active major face, i.e. the one of the first and second major faces that serves as active rake face. Furthermore, the other chip guiding surface at the rearwardly facing end section of each cutting insert will provide increased free space between the rearwardly facing end section of the cutting insert and the leading face of the associated chip flute, which will facilitate the chip evacuation from the top face of the cutting insert during machining and thereby reduce the risk for chip jamming that could cause damage to the inactive main cutting edge at the top face of the cutting insert.

The above-mentioned centre axis of the cutting insert extends between a centre point of the first major face and a centre point of the second major face. By a centre point is meant a centroid or a geometric centre. The cutting insert may be provided with a through hole, which extends centrally through the cutting insert between the first and second major faces, wherein a centre axis of the through hole coincides with the centre axis of the cutting insert.

According to an embodiment of the invention, each one of the third and fourth main side faces has 180° rotational symmetry about a first imaginary reference axis that extends along a line of intersection between the median plane and the longitudinal plane. In this context, each one of the third and fourth main side faces is considered to have 180° rotational symmetry about the first imaginary reference axis even if any of these main side faces is provided with one or more minor markings, for instance in the form of recesses, that lack 180° rotational symmetry image about the first imaginary reference axis, on condition that these one or more markings have no relevance for the functioning of the cutting insert.

According to another embodiment of the invention, each one of the first and second main side faces has 180° rotational symmetry about a second imaginary reference axis that extends along a line of intersection between the median plane and the transverse plane. In this context, each one of the first and second main side faces is considered to have 180° rotational symmetry about the second imaginary reference axis even if any of these main side faces is provided with one or more minor markings, for instance in the form of recesses, that lack 180° rotational symmetry image about the second imaginary reference axis, on condition that these one or more markings have no relevance for the functioning of the cutting insert.

According to another embodiment of the invention, each one of the first and second major faces has 180° rotational symmetry about the centre axis. In this context, each one of the first and second major faces is considered to have 180° rotational symmetry about the centre axis even if any of these major faces is provided with one or more minor markings, for instance in the form of recesses, that lack 180° rotational symmetry image about the centre axis, on condition that these one or more markings have no relevance for the functioning of the cutting insert.

Another embodiment of the invention is characterized in:
- that the above-mentioned abutment surface of the first major face is flat, i.e. flat within manufacturing tolerances, and extends in a first plane that is parallel to the median plane; and
- that the above-mentioned abutment surface of the second 'major face is flat, i.e. flat within manufacturing tolerances, and extends in a second plane that is parallel to the median plane.

In this case, the first edge of the first chip guiding surface and the first edge of the second chip guiding surface are substantially located in said first plane, and the first edge of the third chip guiding surface and the first edge of the fourth chip guiding surface are substantially located in said second plane.

Another embodiment of the invention is characterized in:
- that the first edge of each chip guiding surface comprises an essentially rectilinear central edge part that is located opposite to, and preferably extends in parallel with, an essentially rectilinear central edge part of the second edge of the same chip guiding surface; and
- that each chip guiding surface has a central area formed by the part of the chip guiding surface located between the central edge part of the first edge of the chip guiding surface and the central edge part of the second edge of the chip guiding surface, wherein this central area consists of one or more sub surfaces, each of which being convex as seen in any plane that extends across the sub surface in parallel with the longitudinal plane or being planar.

Another embodiment of the invention is characterized in:
- that at least a major part of said central area of each chip guiding surface consists of a planar major sub surface;
- that the major sub surface of each one of the first and second chip guiding surfaces forms an angle of 20-45°, preferably 35-45°, with said abutment surface of the first major face; and
- that the major sub surface of each one of the third and fourth chip guiding surfaces forms an angle of 20-45°, preferably 35-45°, with said abutment surface of the second major face.

If said angle is smaller than 20°, the chip guiding surface has to occupy a large part of the adjacent abutment surface in order to create enough free space between mutually overlapping end sections of two cutting inserts, which in its turn deteriorates stability of the cutting insert. If said angle is larger than 45°, the chip guiding surface will be too steeply sloping, which leads to impaired chip formation. The best performance has been observed when the angle is 35-45°.

Said central area of each chip guiding surface may as an alternative be entirely convex as seen in any plane that extends across the central area in parallel with the longitudinal plane. A convex shape results in a smaller contact area between the chip and the chip guiding surface, which facilitates chip forming.

According to another embodiment of the invention, the longitudinal plane extends across said planar major sub surface of each chip guiding surface.

Another embodiment of the invention is characterized in:
- that the second edge of the first chip guiding surface and the second edge of the fourth chip guiding surface are located on opposite sides of the median plane; and
- that the second edge of the second chip guiding surface and the second edge of the third chip guiding surface are located on opposite sides of the median plane.

Another embodiment of the invention is characterized in:
- that the second corner cutting edge is connected to the first chip guiding surface at said first end of the first chip guiding surface;
- that the fourth corner cutting edge is connected to the second chip guiding surface at said first end of the second chip guiding surface;
- that the sixth corner cutting edge is connected to the third chip guiding surface at said first end of the third chip guiding surface; and
- that the eighth corner cutting edge is connected to the fourth chip guiding surface at said first end of the fourth chip guiding surface.

Another embodiment of the invention is characterized in:
- that the first main cutting edge is inclined in relation to the median plane such that a first end of the first main cutting edge facing the first corner cutting edge is located further away from the median plane than an opposite second end of the first main cutting edge facing the second corner cutting edge;
- that the second main cutting edge is inclined in relation to the median plane such that a first end of the second main cutting edge facing the third corner cutting edge is located further away from the median plane than an opposite second end of the second main cutting edge facing the fourth corner cutting edge;
- that the third main cutting edge is inclined in relation to the median plane such that a first end of the third main cutting edge facing the fifth corner cutting edge is located further away from the median plane than an opposite second end of the third main cutting edge facing the sixth corner cutting edge; and
- that the fourth main cutting edge is inclined in relation to the median plane such that a first end of the fourth main cutting edge facing the seventh corner cutting edge is located further away from the median plane than an opposite second end of the fourth main cutting edge facing the eighth corner cutting edge.

In this case, each main cutting edge preferably has such an inclination in relation to the median plane that it forms an angle smaller than 6° with the median plane.

The inclination of the main cutting edges is favourable which respect to the chip evacuation from the top face of the cutting insert during machining and gives good cutting properties. An angle of inclination larger than 6° results in a screw-shaped chip with a too large axial extension, which leads to a disturbed cutting process of a helical milling cutter.

Further advantageous features of the double-sided cutting insert according to the present invention will appear from the.description following below.

The invention also relates to a helical milling cutter comprising a plurality of double-sided cutting insert of the above-mentioned type.

An embodiment of the invention is characterized in:
- that the helical milling cutter comprises an elongated tool body having a rear end and an opposite front end, wherein a central longitudinal axis of the tool body extends between the rear end and the front end of the tool body and wherein the tool body comprises:
   - a rear part located at the rear end of the tool body and configured for attachment to a machine,
   - a front surface located at the front end of the tool body, and
   - two or more chip flutes formed in a peripheral surface of the tool body and extending alongside of each other along a part of the tool body from the front surface towards the rear part, the chip flutes being separated from each other in the circumferential direction of the tool body, wherein each chip flute of said two or more chip flutes extends in a helically curved path along the associated part of the tool body and has a leading face and an opposed trailing face, and wherein each chip flute of said two or more chip flutes is provided with an array of two or more insert seats located one after the other along the trailing face of the chip flute such that the insert seats in the same array of insert seats are spaced from each other in a circumferential direction of the tool body in a stepped manner;
- that double-sided cutting inserts of the above-mentioned type are detachably mounted in a respective one of the insert seats in said array of insert seats, each cutting insert being mounted in the associated insert seat with the abutment surface on one of the first and second major faces of the cutting insert serving as an active tangential abutment surface and abutting against a tangential support surface in the insert seat, with one of the main cutting edges at the other one of the first and second major faces of the cutting insert serving as active main cutting edge and extending along a part of the peripheral surface of the tool body, with one of the third and fourth main side faces of the cutting insert included in a forwardly facing end section of the cutting insert that faces the front end of the tool body and with the other one of the third and fourth main side faces of the cutting insert included in a rearwardly facing end section of the cutting insert that faces the rear end of the tool body; and
- that the insert seats in said array of insert seats are so positioned in relation to each other that the rearwardly facing end section of a cutting insert mounted in an insert seat that is located axially forwardly of an adjacent insert seat in the same array of insert seats and the forwardly facing end section of a cutting insert mounted in this adjacent insert seat at least partly overlap each other.

The leading face of a chip flute refers to the face of a chip flute that is provided in the tool body in front of the opposed face of the same chip flute as seen in the intended direction of rotation of the tool body, i.e. rotationally forwardly of the opposed face of the same chip flute as seen in the intended direction of rotation of the tool body. In the corresponding manner, the trailing face of a chip flute refers to the face of a chip flute that is provided in the tool body behind the opposed face of the same chip flute as seen in the intended direction of rotation of the tool body, i.e. rotationally rearwardly of the opposed leading face of the same chip flute as seen in the intended direction of rotation of the tool body.

According to another embodiment of the invention, each chip flute of said two or more chip flutes is arranged in the tool body with a positive helix angle, wherein the insert seats in said array of insert seats are so positioned in relation to each other that an insert seat that is located axially forwardly of an adjacent insert seat in the same array of insert seats is also located rotationally forwardly of this adjacent insert seat as seen in the intended direction of rotation of the tool body. In this case, at least a part of the rearwardly facing end section of a cutting insert mounted in an insert seat that is located axially forwardly of an adjacent insert seat in the same array of insert seats projects in the axial direction of the tool body over, and thereby overlaps, at least a part of the forwardly facing end section of a cutting insert mounted in this adjacent insert seat.

According to another embodiment of the invention, the leading face of at least one of said two or more chip flutes, preferably of each chip flute of said two or more chip flutes, is provided with at least one recess located opposite to and facing the array of insert seats provided in the trailing face of the same chip flute. This at least one recess will provide increased free space between at least one of the cutting inserts in the chip flute and the leading face of the chip flute, which will facilitate the chip evacuation from the top face of the cutting insert or inserts during machining and thereby reduce the risk for chip jamming without weakening the tool. An axial length of the recess, i.e. a length of the recess in the axial direction of the tool body, is preferably larger than 50% of a length of the main cutting edge of said cutting insert, more preferably larger than the length of the main cutting edge of said cutting insert.

Further advantageous features of the helical milling cutter according to the present invention will appear from the description following below.

### BRIEF DESCRIPTION OF THE DRAWINGS

With reference to the appended drawings, a specific description of embodiments of the invention cited as examples follows below. In the drawings:
- Figs 1a and 1b: are perspective views from different directions of a double-sided cutting insert according to an embodiment of the present invention,
- Fig 1c: is a plan view from above of the cutting insert of Figs 1a and 1b,
- Fig 1d: is a plan view from below of the cutting insert of Figs 1a and 1b,
- Fig 1e: is a cut according to the line Ie-Ie in Fig 1c,
- Figs 1f: is a lateral view of the cutting insert of Figs 1a and 1b seen from a first side,
- Figs 1g: is a lateral view of the cutting insert of Figs 1a and 1b seen from an opposite second side,
- Figs 1h: is a front view of the cutting insert of Figs 1a and 1b,
- Figs 1i: is a rear view of the cutting insert of Figs 1a and 1b,
- Fig 2a: is a perspective view of a double-sided cutting insert according to an alternative embodiment of the invention,
- Fig 2b: is a plan view from above of the cutting insert of Fig 2a,
- Fig 2c: is a cut according to the line IIc-IIc in Fig 2b,
- Fig 3: is a perspective view of a helical milling cutter provided with cutting inserts according to the embodiment illustrated in Figs 1a-1i,
- Fig 4: is a perspective view from another direction of the helical milling cutter of Fig 3,
- Fig 5: is a lateral view of the helical milling cutter of Fig 3,
- Fig 6: is a front view of the helical milling cutter of Fig 3,
- Fig 7: is a lateral view of a tool body included in the helical milling cutter of Fig 3,
- Fig 8: is a perspective view of the tool body of Fig 7, as seen with cutting inserts mounted in some of the insert seats in the tool body,
- Fig 9: is a detail enlargement of a part of the helical milling cutter of Fig 3,
- Fig 10: is another detail enlargement of a part of the helical milling cutter of Fig 3,
- Fig 11: is a cut according to the line XI-XI in Fig 10,
- Fig 12: is a perspective view of the helical milling cutter of Fig 3, with schematically illustrated chips formed by two of the cutting inserts of the helical milling cutter, and
- Fig 13: is a detail enlargement corresponding to Fig 10, with a schematically illustrated chip formed by one of the cutting inserts.

### DETAILED DESCRIPTION OF EMBODIMENTS OF THE INVENTION

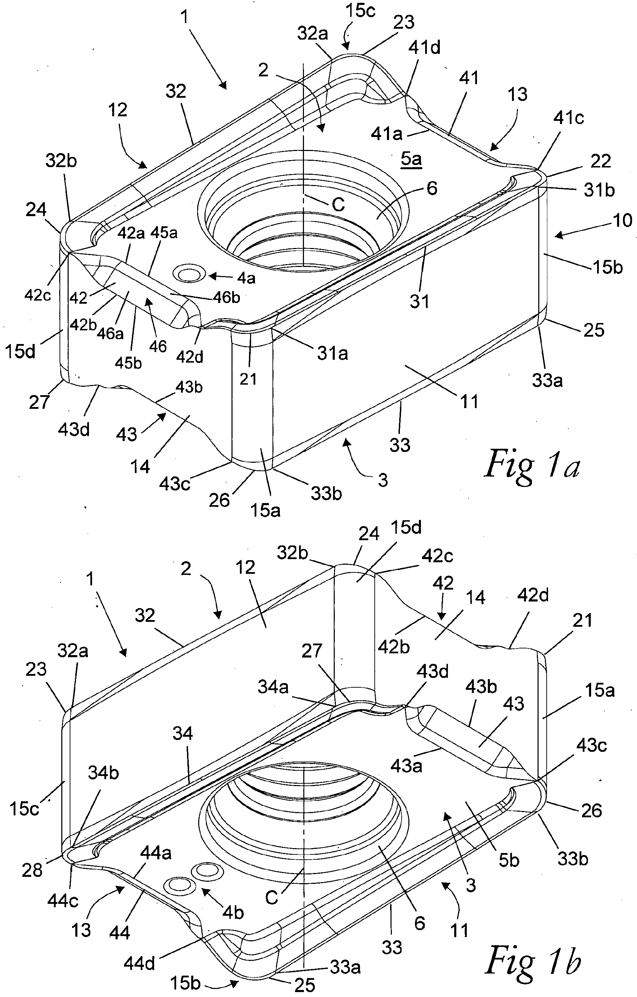

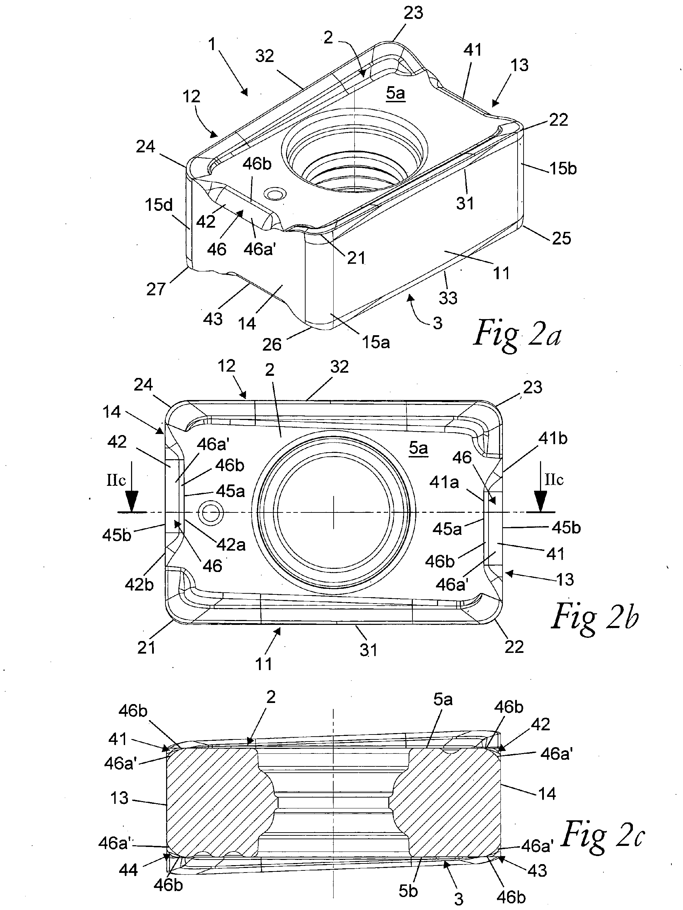

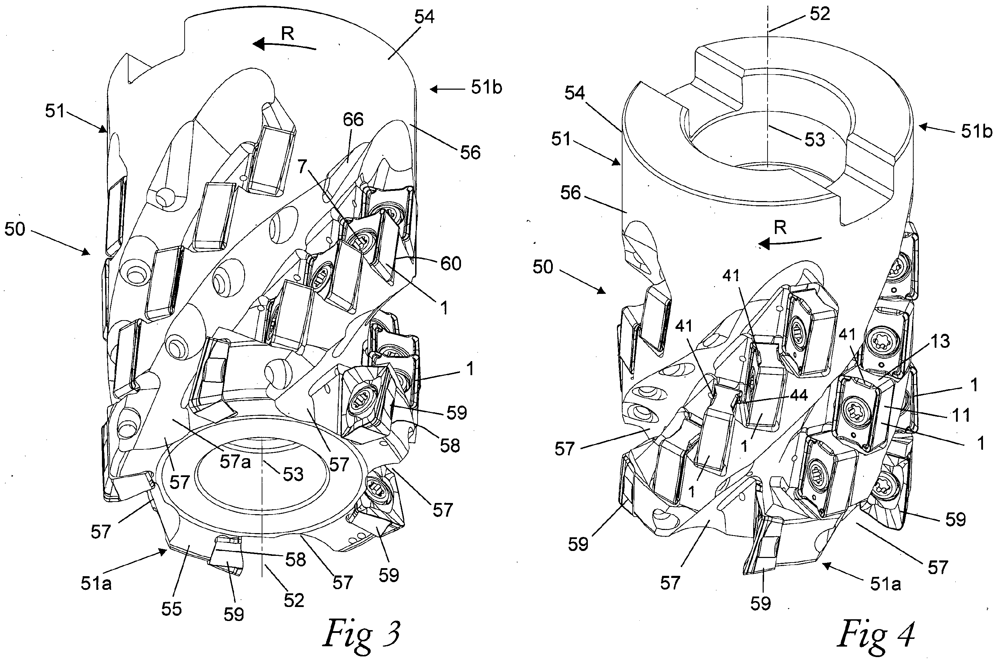

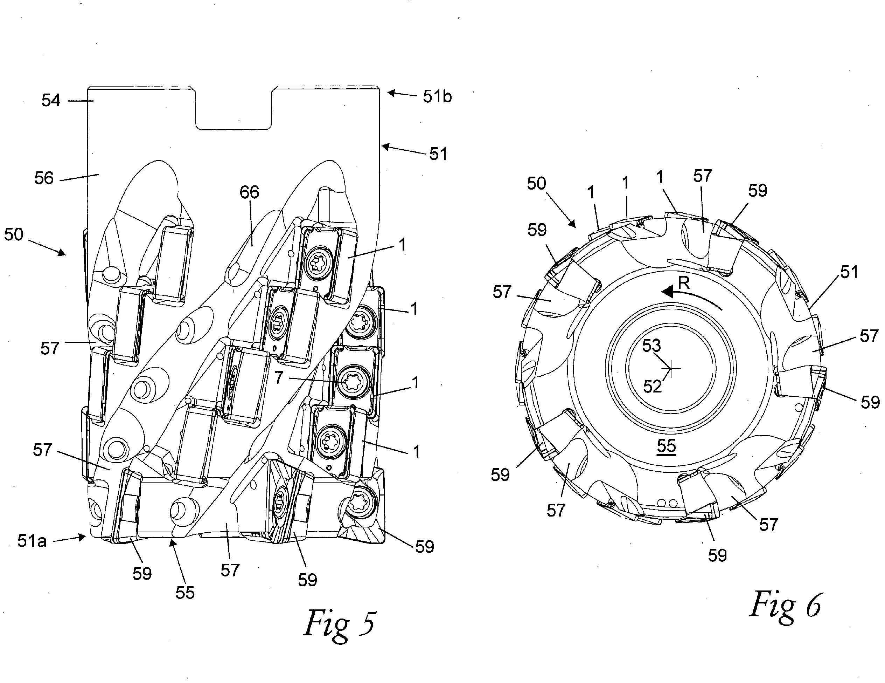

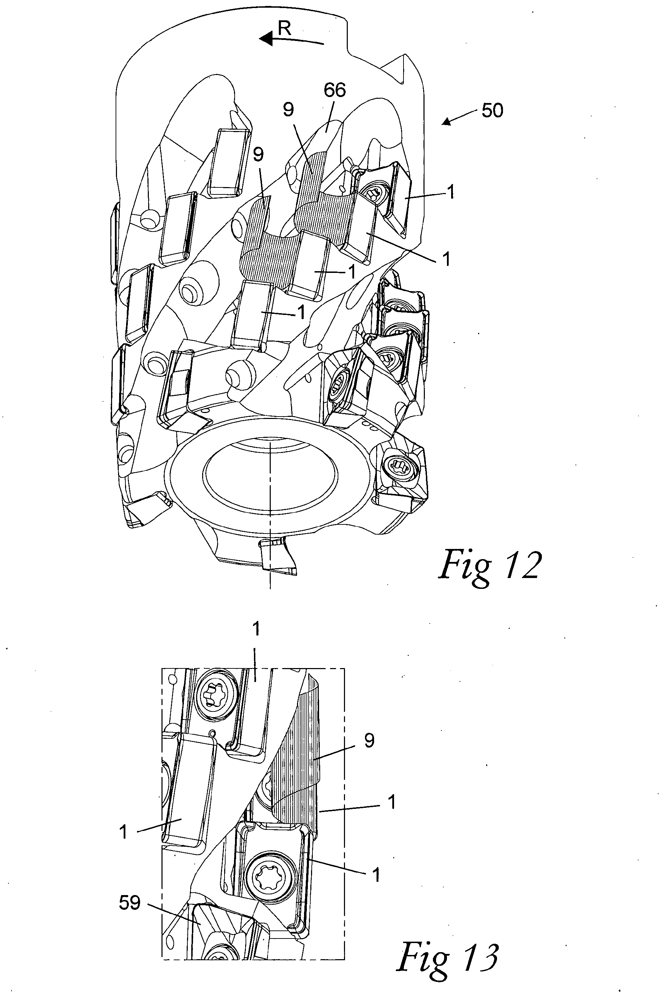

Two different embodiments of a double-sided cutting insert 1 according to the present invention are illustrated in Figs 1a-1i and Figs 2a-2c. The cutting insert 1 is configured to be used in a helical milling cutter, for instance a helical milling cutter 50 of the type illustrated in Figs 3-13.

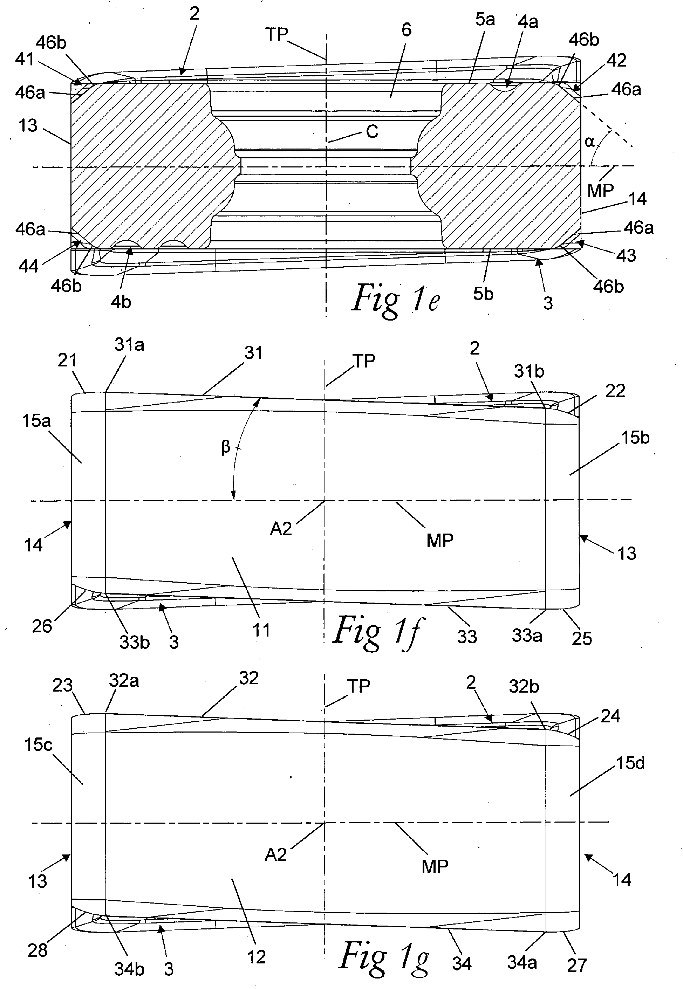

The cutting insert 1 is turnable into four different working positions. The cutting insert 1 comprises a first major face 2 and a second major face 3 arranged on opposite sides of the cutting insert and serving as top and bottom faces of the cutting insert. The first and second major faces 2, 3 constitute rake faces of the cutting insert 1 and comprise rake surfaces. The first and second major faces 2, 3 have an essentially rectangular shape, as seen in a plan view of the cutting insert 1. The cutting insert has a centre axis C, which extends between the first and second major faces 2, 3. A median plane MP, which constitutes an imaginary plane, extends halfway between the first and second major faces 2, 3 perpendicularly to the centre axis C, as illustrated in Figs 1e-1i. In the illustrated embodiment, the first major face 2 is provided with a marking 4a in the form of a circular recess and the second major face 3 is provided with a marking 4b in the form of two circular recesses. The markings 4a, 4b facilitate an identification of the four different working positions of the cutting insert 1. Except for the markings 4a, 4b, the first and second major faces 2, 3 are, within manufacturing tolerances, identical to each other. Furthermore, except for the markings 4a, 4b, each one of the first and second major faces 2, 3 has 180° rotational symmetry about the centre axis C.

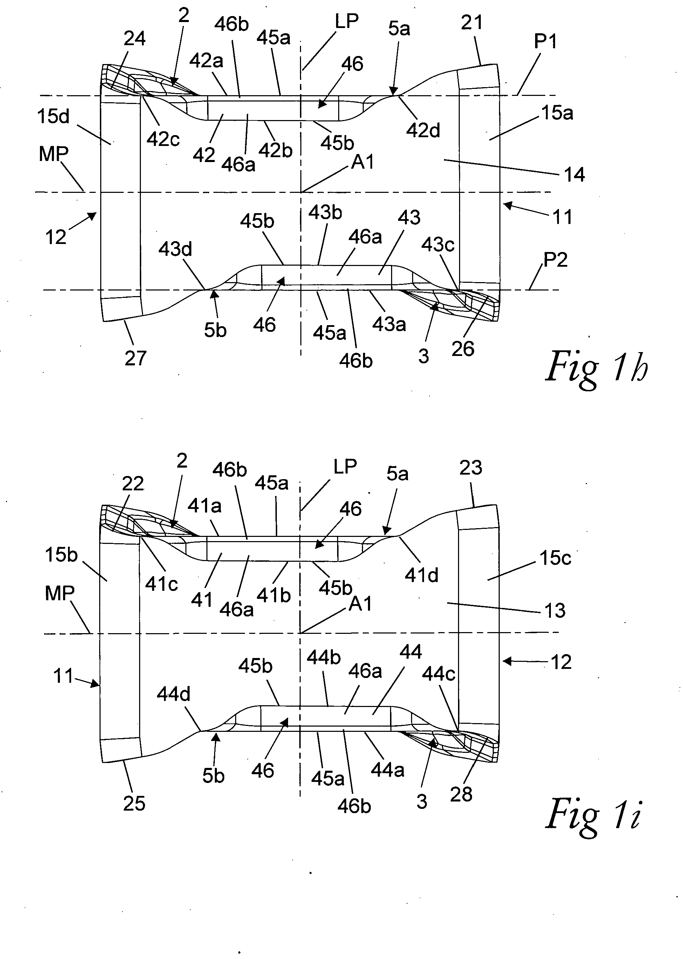

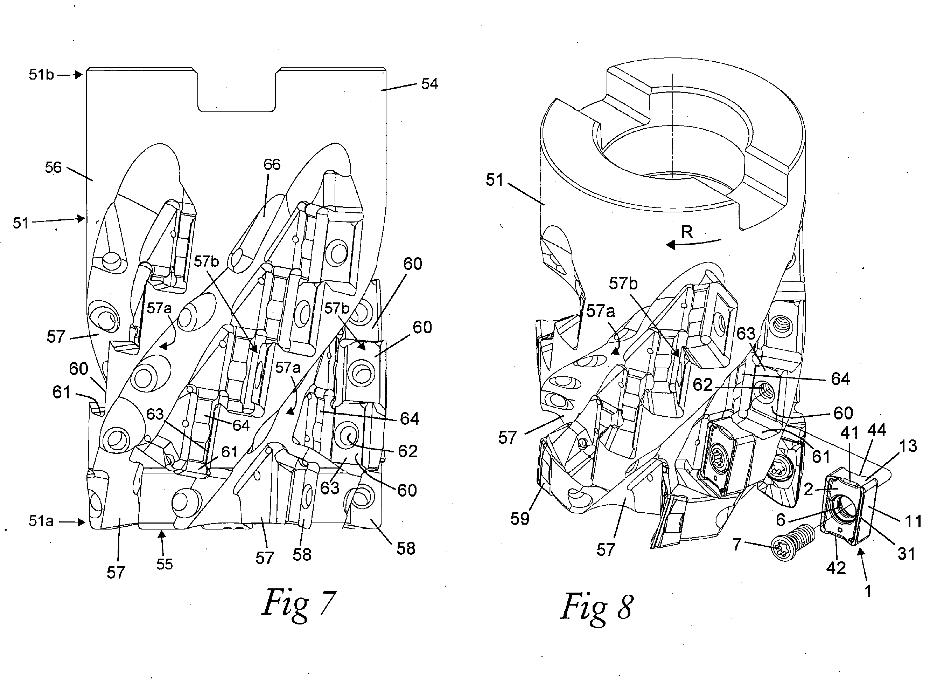

Each one of the first and second major faces 2, 3 comprises an abutment surface 5a, 5b that is configured to serve as a tangential abutment surface of the cutting insert 1 in two of said working positions of the cutting insert and abut against a corresponding tangential support surface 63 (see Figs 7, 8 and 11) in an insert seat 60 in a tool body 51 of a helical milling cutter 50 when the cutting insert 1 is mounted in the insert seat in any of these two working positions. Thus, the abutment surface 5a on the first major face 2 is configured to serve as the tangential abutment surface of the cutting insert 1 in two of the working positions of the cutting insert, and the abutment surface 5b on the second major face 3 is configured to serve as the tangential abutment surface of the cutting insert 1 in the other two working positions of the cutting insert. In the illustrated embodiment, the abutment surface 5a of the first major face 2 is flat, or at least essentially flat, and extends in a first plane P1 (see Fig 1h) that is parallel to the median plane MP, and the abutment surface 5b of the second major face 3 is also flat, or at least essentially flat, and extends in a second plane P2 that is parallel to the first plane P1 and to the median plane MP.

In the illustrated embodiment, the cutting insert 1 is provided with a through hole 6, which extends centrally through the cutting insert between the first and second major faces 2, 3. The through hole 6 is configured to receive a fastening element 7, for instance in the form of a screw, by means of which the cutting insert may be releasably fixed to an insert seat 60 of a helical milling cutter 50. The centre axis C of the cutting insert 1 coincides with the centre axis of the through hole 6. The cutting insert 1 may as an alternative lack a through hole 6, wherein the cutting insert is configured to be releasably fixed to an insert seat of a helical milling cutter by means of suitable clamping means.

A peripheral surface 10 extends around the cutting insert 1 between the first and second major faces 2, 3. The peripheral surface 10 comprises:
- a first main side face 11 and a second main side face 12 arranged opposite to each other on two opposite long sides of the cutting insert 1;
- a third main side face 13 and a fourth main side face 14 arranged opposite to each other on two opposite short sides of the cutting insert 1;
- a first corner side face 15a arranged between the first and fourth main side faces 11, 14;
- a second corner side face 15b arranged between the first and third main side faces 11, 13;
- a third corner side face 15c arranged between the second and third main side faces 12, 13; and
- a fourth corner side face 15d arranged between the second and fourth main side faces 12, 14.

Thus, the first and second main side faces 11, 12 are located opposite to each other on mutually opposite sides of the centre axis C of the cutting insert 1. In the corresponding manner, the third and fourth main side faces 13, 14 are located opposite to each other on mutually opposite sides of the centre axis C of the cutting insert 1.

A longitudinal plane LP, which constitutes an imaginary plane, extends halfway between the first and second main side faces 11, 12 perpendicularly to the median plane MP and contains the centre axis C of the cutting insert 1. A transverse plane TP, which also constitutes an imaginary plane, extends halfway between the third and fourth main side faces 13, 14 perpendicularly to the median plane MP and contains the centre axis C of the cutting insert 1. The longitudinal plane LP and the transverse plane TP extend perpendicularly to each other and intersect each other along the centre axis C of the cutting insert 1. Each one of the third and fourth main side faces 13, 14 has 180° rotational symmetry about a first imaginary reference axis A1 (see Figs 1h and 1i) that extends along a line of intersection between the median plane MP and the longitudinal plane LP, and each one of the first and second main side faces 11, 12 has 180° rotational symmetry about a second imaginary reference axis A2 (see Figs 1f and 1g) that extends along a line of intersection between the median plane MP and the transverse plane TP.

The cutting insert 1 comprises the following cutting edges:
- a curved first corner cutting edge 21 formed at an intersection between the first corner side face 15a and the first major face 2;
- a curved second corner cutting edge 22 formed at an intersection between the second corner side face 15b and the first major face 2;
- a curved third corner cutting edge 23 formed at an intersection between the third corner side face 15c and the first major face 2;
- a curved fourth corner cutting edge 24 formed at an intersection between the fourth corner side face 15d and the first major face 2;
- a curved fifth corner cutting edge 25 formed at an intersection between the second corner side face 15b and the second major face 3;
- a curved sixth corner cutting edge 26 formed at an intersection between the first corner side face 15a and the second major face 3;
- a curved seventh corner cutting edge 27 formed at an intersection between the fourth corner side face 15d and the second major face 3;
- a curved eighth corner cutting edge 28 formed at an intersection between the third corner side face 15c and the second major face 3;
- a first main cutting edge 31 formed at an intersection between the first major face 2 and the first main side face 11, the first main cutting edge 31 extending between the first and second corner cutting edges 21, 22 and having a first end 31a connected to the first corner cutting edge 21 and an opposite second end 31b connected to the second corner cutting edge 22;
- a second main cutting edge 32 formed at an intersection between the first major face 2 and the second main side face 12, the second main cutting edge 32 extending between the third and fourth corner cutting edges 23, 24 and having a first end 32a connected to the third corner cutting edge 23 and an opposite second end 32b connected to the fourth corner cutting edge 24;
- a third main cutting edge 33 formed at an intersection between the second major face 3 and the first main side face 11, the third main cutting edge 33 extending between the fifth and sixth corner cutting edges 25, 26 and having a first end 33a connected to the fifth corner cutting edge 25 and an opposite second end 33b connected to the sixth corner cutting edge 26; and
- a fourth main cutting edge 34 formed at an intersection between the second major face 3 and the second main side face 12, the fourth main cutting edge 34 extending between the seventh and eighth corner cutting edges 27, 28 and having a first end 34a connected to the seventh corner cutting edge 27 and an opposite second end 34b connected to the eighth corner cutting edge 28.

The cutting edges 21, 31, 22, 23, 32, 24 located along the periphery of the first major face 2 form two different sets of cutting edges, wherein a first one of these sets comprises the first and second corner cutting edges 21, 22 and the intermediate first main cutting edge 31 and the other one of these sets comprises the third and fourth corner cutting edges 23, 24 and the intermediate second main cutting edge 32. In the corresponding manner, the cutting edges 25, 33, 26, 27, 34, 28 located along the periphery of the second major face 3 form two other sets of cutting edges, wherein a first one of these sets comprises the fifth and sixth corner cutting edges 25, 26 and the intermediate third main cutting edge 33 and the other one of these sets comprises the seventh and eighth corner cutting edges 27, 28 and the intermediate fourth main cutting edge 34. In each one of the four different working positions of the cutting insert 1, the cutting edges of one of the above-mentioned four different sets of cutting edges constitute the active cutting edges of the cutting insert.

The above-mentioned 180° rotational symmetry of the first major face 2 about the centre axis C implies:
- that the first and second main cutting edges 31, 32 are identical to each other, within manufacturing tolerances;
- that the first and third corner cutting edges 21, 23 are identical to each other, within manufacturing tolerances; and
- that the second and fourth corner cutting edges 22, 24 are identical to each other, within manufacturing tolerances.

In the corresponding manner, the above-mentioned 180° rotational symmetry of the second major face 3 about the centre axis C implies:
- that the third and fourth main cutting edges 33, 34 are identical to each other, within manufacturing tolerances;
- that the fifth and seventh corner cutting edges 25, 27 are identical to each other, within manufacturing tolerances; and
- that the sixth and eighth corner cutting edges 26, 28 are identical to each other, within manufacturing tolerances.

In the illustrated embodiments, each main cutting edge 31-34 is inclined in relation to the median plan MP, wherein:
- the first main cutting edge 31 is inclined in relation to the median plane MP such that the first end 31a of the first main cutting edge is located further away from the median plane MP than the second end 31b of the first main cutting edge;
- the second main cutting edge 32 is inclined in relation to the median plane MP such that the first end 32a of the second main cutting edge is located further away from the median plane MP than the second end 32b of the second main cutting edge;
- the third main cutting edge 33 is inclined in relation to the median plane MP such that the first end 33a of the third main cutting edge is located further away from the median plane MP than the second end 33b of the third main cutting edge; and
- the fourth main cutting edge 34 is inclined in relation to the median plane MP such that the first end 34a of the fourth main cutting edge is located further away from the median plane MP than the second end 34b of the fourth main cutting edge.

The inclination of the main cutting edges 31-34 is with advantage such that each main cutting edge 31-34 forms an angle β (see Fig 1f) smaller than 6°, and preferably larger than 1°, with the median plane MP.

In the illustrated embodiments, the first and second main cutting edges 31, 32 are both arranged at a longer distance from the median plane MP as compared to the abutment surface 5a of the first major face 2 and are consequently located on a higher level than the this abutment surface 5a when the cutting insert 1 is positioned with the first major face 2 facing upwards. In the corresponding manner, the third and fourth main cutting edges 33, 34 are both arranged at a longer distance from the median plane MP as compared to the abutment surface 5b of the second major face 3 and are consequently located on a higher level than this abutment surface 5b when the cutting insert 1 is positioned with the second major face 3 facing upwards.

The cutting insert 1 further comprises:
- an inclined first chip, guiding surface 41 extending between the first major face 2 and the third main side face 13 and located between the second corner side face 15b and the third corner side face 15c;
- an inclined second chip guiding surface 42 extending between the first major face 2 and the fourth main side face 14 and located between the first corner side face 15a and the fourth corner side face 15d;
- an inclined third chip guiding surface 43 extending between the second major face 3 and the fourth main side face 14 and located between the first corner side face 15a and the fourth corner side face 15d; and
- an inclined fourth chip guiding surface 44 extending between the second major face 3 and the third main side face 13 and located between the second corner side face 15b and the third corner side face 15c.

The first chip guiding surface 41 has a first edge 41a that forms a boundary between the first chip guiding surface and the first major face 2 and a second edge 41b that forms a boundary between the first chip guiding surface and the third main side face 13, wherein the first chip guiding surface 41 is completely bounded by these first and second edges 41a, 41b and the first edge 41a meets the second edge 41b at a first end 41c of the first chip guiding surface facing the second corner cutting edge 22 and also at a second end 41d of the first chip guiding surface facing the third corner cutting edge 23.

The second chip guiding surface 42 has a first edge 42a that forms a boundary between the second chip guiding surface and the first major face 2 and a second edge 42b that forms a boundary between the second chip guiding surface and the fourth main side face 14, wherein the second chip guiding surface 42 is completely bounded by these first and second edges 42a, 42b and the first edge 42a meets the second edge 42b at a first end 42c of the second chip guiding surface facing the fourth corner cutting edge **24 and also** at a second end 42d of the second chip guiding surface facing the first corner cutting edge 21.

The third chip guiding surface 43 has a first edge 43a that forms a boundary between the third chip guiding surface and the second major face 3 and a second edge 43b that forms a boundary between the third chip guiding surface and the fourth main side face 14, wherein the third chip guiding surface 43 is completely bounded by these first and second edges 43a, 43b and the first edge 43a meets the second edge 43b at a first end 43c of the third chip guiding surface facing the sixth corner cutting edge 26 and also at a second end 43d of the third chip guiding surface facing the seventh corner cutting edge 27.

The fourth chip guiding surface 44 has a first edge 44a that forms a boundary between the fourth chip guiding surface and the second major face 3 and a second edge 44b that forms a boundary between the fourth chip guiding surface and the third main side face 13, wherein the fourth chip guiding surface 44 is completely bounded by these first and second edges 44a, 44b and the first edge 44a meets the second edge 44b at a first end 44c of the fourth chip guiding surface facing the eighth corner cutting edge 28 and also at a second end 44d of the fourth chip guiding surface facing the fifth corner cutting edge 25.

Each one of the first and second chip guiding surfaces 41, 42 intersects the above-mentioned abutment surface 5a of the first major face 2 on both sides of the longitudinal plane LP. In the corresponding manner, each one of the third and fourth chip guiding surfaces 43, 44 intersects the above-mentioned abutment surface 5b of the second major face 3 on both sides of the longitudinal plane LP. Furthermore, each one of the chip guiding surfaces 41, 42, 43, 44 has such an inclination in relation to the transverse plane TP that the first edge 41a, 42a, 43a, 44a of the chip guiding surface is located closer to the transverse plane TP than the second edge 41b, 42b, 43b, 44b of the same chip guiding surface as seen in the longitudinal plane LP and as seen in any plane that extends across the chip guiding surface and is parallel to the longitudinal plane LP. Thus, each one of the chip guiding surfaces 41, 42, 43, 44 is inclined outwards away from the transverse plane TP as seen in a direction from its first edge 41a, 42a, 43a, 44a to its second edge 41b, 42b, 43b, 44b in the longitudinal plane LP and in any plane that extends across the chip guiding surface and is parallel to the longitudinal plane LP.

None of the chip guiding surfaces 41-44 intersects the median plane MP. Thus, the second edge 41b of the first chip guiding surface 41 extends along the third main side face 13 on a first side of the median plane MP and the second edge 44b of the fourth chip guiding surface 44 extends along the third main side face 13 on an opposite second side of the median plane MP. In the corresponding manner, the second edge 42b of the second chip guiding surface 42 extends along the fourth main side face 14 on a first side of the median plane MP and the second edge 43b of the third chip guiding surface 43 extends along the fourth main side face 14 on an opposite second side of the median plane MP.

In the illustrated embodiments:
- the second corner cutting edge 22 is connected to the first chip guiding surface 41 at the first end 41c of the first chip guiding surface, whereas the third corner cutting edge 23 is spaced from the second end 41d of the first chip guiding surface;
- the fourth corner cutting edge 24 is connected to the second chip guiding surface 42 at the first end 42c of the second chip guiding surface, whereas the first corner cutting edge 21 is spaced from the second end 42d of the second chip guiding surface;
- the sixth corner cutting edge 26 is connected to the third chip guiding surface 43 at the first end 43c of the third chip guiding surface, whereas the seventh corner cutting edge 27 is spaced from the second end 43d of the third chip guiding surface; and
- the eighth corner cutting edge 28 is connected to the fourth chip guiding surface 44 at the first end 44c of the fourth chip guiding surface, whereas the fifth corner cutting edge 25 is spaced from the second end 44d of the fourth chip guiding surface.

In the illustrated embodiments, the first edge 41a of the first chip guiding surface 41 and the first edge 42a of the second chip guiding surface 42 are both located in the above-mentioned first plane P1. In the corresponding manner, the first edge 43a of the third chip guiding surface 43 and the first edge 44a of the fourth chip guiding surface 44 are both located in the above-mentioned second plane P2.

In the illustrated embodiments, the first edge 41a, 42a, 43a, 44a of each chip guiding surface 41, 42, 43, 44 comprises an essentially rectilinear central edge part 45a that is located opposite to an essentially rectilinear central edge part 45b of the second edge 41b, 42b, 43b, 44b of the same chip guiding surface, wherein the central edge part 45a of the first edge of each chip guiding surface preferably extends essentially in parallel with the central edge part 45b of the second edge of the same chip guiding surface. In this case, each chip guiding surface 41, 42, 43, 44 has a central area 46 formed by the part of the chip guiding surface located between the central edge part 45a of the first edge of the chip guiding surface and the central edge part 45b of the second edge of the same chip guiding surface, wherein this central area 46 consists of one or more sub surfaces 46a, 46a', 46b, each of which being convex as seen in any plane that extends across the sub surface in parallel with the longitudinal plane LP or being planar.

In the embodiment illustrated in Figs 1a-1i, a major part of said central area 46 of each chip guiding surface 41-44 consists of a planar major sub surface 46a, wherein this planar major sub surface 46a adjoins to a convex minor sub surface 46b located between the major sub surface 46a and the central edge part 45a of the first edge 41a, 42a, 43a, 44a of the chip guiding surface. The major sub surface 46a of each one of the first and second chip guiding surfaces 41, 42 forms an angle a (see Fig 1e) of 20-45°, preferably 35-45°, with the above-mentioned abutment surface 5a of the first major face 2. In the corresponding manner, the major sub surface 46a of each one of the third and fourth chip guiding surfaces 43, 44 forms an angle a of 20-45°, preferably 35-45°, with the above-mentioned abutment surface 5b of the second major face 3. The longitudinal plane LP extends across the major sub surface 46a of each chip guiding surface 41-44.

In the embodiment illustrated in Figs 2a-2c, a major part of said central area 46 of each chip guiding surface 41-44 consists of a convex major sub surface 46a', wherein this convex major sub surface 46a' adjoins to a convex minor sub surface 46b located between the major sub surface 46a' and the central edge part 45a of the first edge 41a, 42a, 43a, 44a of the chip guiding surface.

Figs 3-6 illustrate a milling tool in the form of a helical milling cutter 50. It is a right-hand milling tool. The helical milling cutter 50 comprises an elongated tool body 51 and is configured to be rotated about an axis of rotation 52. The tool body 51 has a rear end 51b and an opposite front end 51a. A longitudinal axis 53 of the tool body 51 extends between the rear end 51b and the front end 51a of the tool body, wherein this longitudinal axis 53 coincides with the axis of rotation 52 of the helical milling cutter 50. At the rear end 51b, the tool body 51 comprises a rear part 54, through which the tool body 51 is mountable, directly or via an intermediate tool holder, to a rotating spindle or the similar of a machine, for instance a milling machine. At the front end 51a, the tool body 51 is provided with a front surface 55. The tool body 51 has a peripheral surface 56 with an essentially circular cylindrical basic shape.

Chip flutes 57 are formed in the peripheral surface 56 of the tool body 51 and extend alongside of each other along a part of the tool body 51 from the front surface 55 towards the rear part 54, wherein the chip flutes 57 are separated from each other in the circumferential direction of the tool body 51. In the illustrated example, the tool body 51 is provided with five chip flutes 57, which are evenly distributed about the longitudinal axis 53 of the tool body. However, the tool body 51 may as an alternative, inter alia depending on the diameter of the tool body, be provided with any other suitable number of chip flutes 57. A smaller diameter tool body may for instance be provided with two chip flutes 57, whereas a larger diameter tool body may be provided with more than five chip flutes 57. Each chip flute 57 extends in a helically curved path along the associated part of the tool body 51 and has a leading face 57a, which preferably intersects the front surface 55 of the tool body, and an opposed trailing face 57b, as illustrated in Figs 7 and 8.

Each chip flute 57 is provided with a first insert seat 58, which constitutes an axially foremost insert seat of the chip flute and which is located at a transition between the front surface 55 and the peripheral surface 56 of the tool body 51, wherein this first insert seat 58 is open towards the front surface 55 of the tool body 51 in order to allow a cutting insert 59 mounted in the first insert seat 58 to project in the axial direction of the tool body 51 beyond the front end 51a thereof and also open towards the peripheral surface 56 of the tool body 51 in order to allow a cutting insert 59 mounted in the first insert seat 58 to project in the radial direction of the tool body 51 beyond the peripheral surface 56 thereof.

Each chip flute 57 is also provided with an array of two or more insert seats 60 located one after the other along the trailing face 57b of the chip flute 57 such that the insert seats 60 in the same array of insert seats are spaced from each other in a circumferential direction of the tool body 51 in a stepped manner. Each insert seat 60 in said array of insert seats has an end wall 61 at a first end that faces the front end 51a of the tool body 51 and has an opposite open second end that faces the rear end 51b of the tool body 51. Each insert seat 60 in said array of insert seats is also open towards the peripheral surface 56 of the tool body 51 in order to allow a cutting insert 1 mounted in the insert seat 60 to project in the radial direction of the tool body 51 beyond the peripheral surface 56 thereof. A double-sided cutting insert 1 is mounted in each one of the insert seats 60 in the array. In the illustrated embodiment, the helical milling cutter 50 is provided with double-sided cutting. inserts 1 of the type illustrated in Figs 1a-1i. Each cutting insert 1 is configured to be releasably mounted in the associated insert seat 60. In the illustrated embodiment, each cutting insert 1 is fixed to the associated insert seat 60 by means of a fastening element 7 in the form of a screw, which extends through the through hole 6 in the cutting insert 1 and is engaged in a threaded hole 62 (see Figs 7 and 8) in a tangential support surface 63 in the insert seat. The insert seat 60 is also provided with a radial support surface 64. Each cutting insert 1 is mounted in the associated insert seat 60:
- with the abutment surface 5a, 5b on one of the first and second major faces 2, 3 of the cutting insert serving as an active tangential abutment surface and abutting against the tangential support surface 63 in the insert seat,
- with one of the main cutting edges 31-34 at the other one of the first and second major faces 2, 3 of the cutting insert serving as active main cutting edge and extending along a part of the peripheral surface 56 of the tool body 51,
- with one of the first and second main side faces 11, 12 of the cutting insert serving as an active radial abutment surface and abutting against the radial support surface 64 in the insert seat,
- with one of the third and fourth main side faces 13, 14 of the cutting insert included in a forwardly facing end section 8a of the cutting insert that faces the front end 51a of the tool body 51, and
- with the other one of the third and fourth main side faces 13, 14 of the cutting insert included in a rearwardly facing end section 8b of the cutting insert that faces the rear end 51b of the tool body 51.

The insert seats 60 in said array of insert seats are so positioned in relation to each other that the rearwardly facing end section 8b of a cutting insert 1 mounted in an insert seat 60 that is located axially forwardly of an adjacent insert seat 60 in the same array of insert seats and the forwardly facing end section 8a of a cutting insert 1 mounted in this adjacent insert seat 60 at least partly overlap each other, as seen in the axial direction of the tool body 51, to thereby allow the active cutting edges of the cutting inserts 1 in one and the same array of insert seats 60 to jointly form a long cutting edge of stepped configuration.

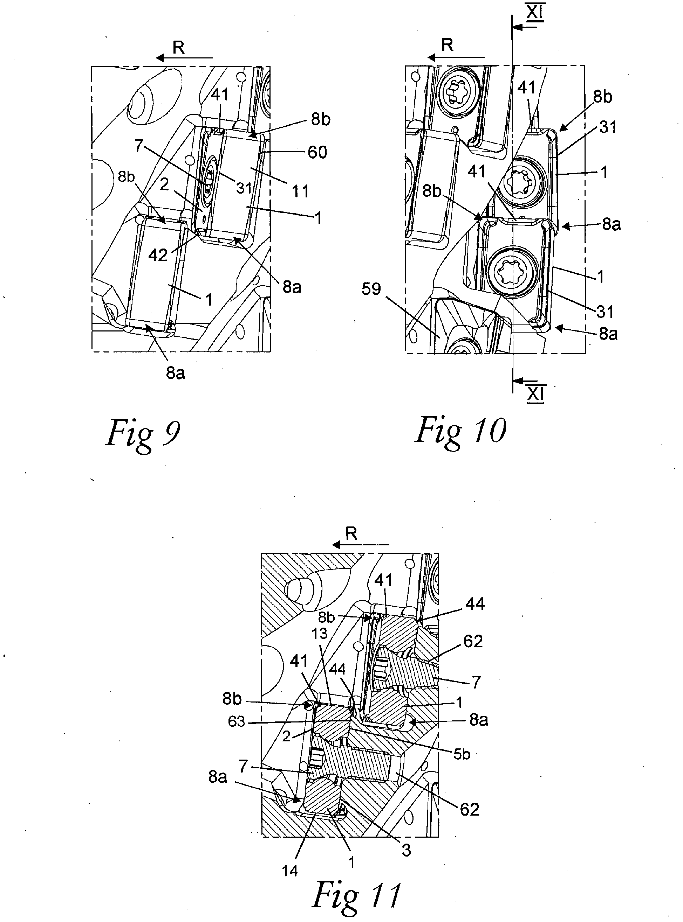

In the illustrated embodiment, the chip flutes 57 are arranged in the tool body 51 with a positive helix angle. In this case, the insert seats 60 in said array of insert seats are so positioned in relation to each other that an insert seat 60 that is located axially forwardly of an adjacent insert seat 60 in the same array of insert seats is also located rotationally forwardly of this adjacent insert seat 60 as seen in the intended direction of rotation R of the tool body 51. This arrangement of the insert seats 60 implies that a part of the rearwardly facing end section 8b of a cutting insert 1 mounted in an insert seat 60 that is located axially forwardly of an adjacent insert seat 60 in the same array of insert seats projects over, and thereby overlaps in axial direction of the tool body 51, a part of the forwardly facing end section 8a of a cutting insert 1 mounted in this adjacent insert seat, as illustrated in Figs 9-11.

The chip flutes 57 may as an alternative be arranged in the tool body 51 with a negative helix angle. In this case, the insert seats 60 in said array of insert seats are so positioned in relation to each other that an insert seat 60 that is located axially forwardly of an adjacent insert seat 60 in the same array of insert seats is also located rotationally rearwardly of this adjacent insert seat 60 as seen in the intended direction of rotation R of the tool body 51. This arrangement of the insert seats 60 implies that a part of the forwardly facing end section 8a of a cutting insert 1 mounted in an insert seat 60 that is located axially rearwardly of an adjacent insert seat 60 in the same array of insert seats projects over, and thereby overlaps in axial direction of the tool body 51, a part of the rearwardly facing end section 8b of a cutting insert 1 mounted in this adjacent insert seat.

In the illustrated example, each one of the cutting inserts 1 is arranged in the associated insert seat 60 with the abutment surface 5b of the second major face 3 serving as active tangential abutment surface and abutting against the tangential support surface 63 in the insert seat and with the first main cutting edge 31 serving as active main cutting edge. In this case, the fourth chip guiding surface 44 of a cutting insert 1 mounted in an insert seat 60 that is located axially forwardly of an adjacent insert seat 60 in the same array of insert seats overlaps and faces the forwardly facing end section 8a of the cutting insert 1 mounted in this adjacent insert seat and may thereby guide the chips 9 formed by the active main cutting edge of the last-mentioned cutting insert. Each cutting insert 1 may of course also be mounted in the associated insert seat 60 in any other of its four working positions.

In the illustrated example, the above-mentioned array of insert seats in each chip flute 57 is provided with four consecutive insert seats 60, which are configured to receive a respective cutting insert 1. However, the arrays of insert seats in the chip flutes 57 may as an alternative be provided with any other suitable number of insert seats 60.

In the illustrated embodiment, the leading face 57a of each chip flute is provided with recesses 66 located opposite to and facing the array of insert seats 60 provided in the trailing face 57b of the same chip flute. In the illustrated example, the above-mentioned threaded holes 62 provided in the insert seats 60 of a chip flute 57 are formed as through holes and end in the leading face 57a of an adjacent chip flute 57, wherein said recesses 66 are formed by widened end sections of these through holes. Preferably, at least one such recess 66 has an axial length, i.e. a length as measured in the axial direction of the tool body 51, that is larger than 50%, more preferably larger than 100%, of a length of one of the main cutting edges 31-34 of the cutting inserts 1. In the illustrated embodiment, the axially rearmost recess 66 in the leading face 57a of each chip flute has such an axial length.

The illustrated embodiments of the double-sided cutting insert are right-hand variants, i.e. they are arranged to be used in a right-hand tool illustrated in Figs 3-13. As seen along the centre axis C toward the first major face 2, the peripheral surface 10 is arranged such that, when seen in a clockwise direction, the first main side face 11 is followed by the first corner side face 15a followed by the fourth main side face 14 followed by the fourth corner side face 15d followed by the second main side face 12 followed by the third corner side face 15c followed by the third main side face 13 followed by the second corner side face 15b followed by the first main side face 11.

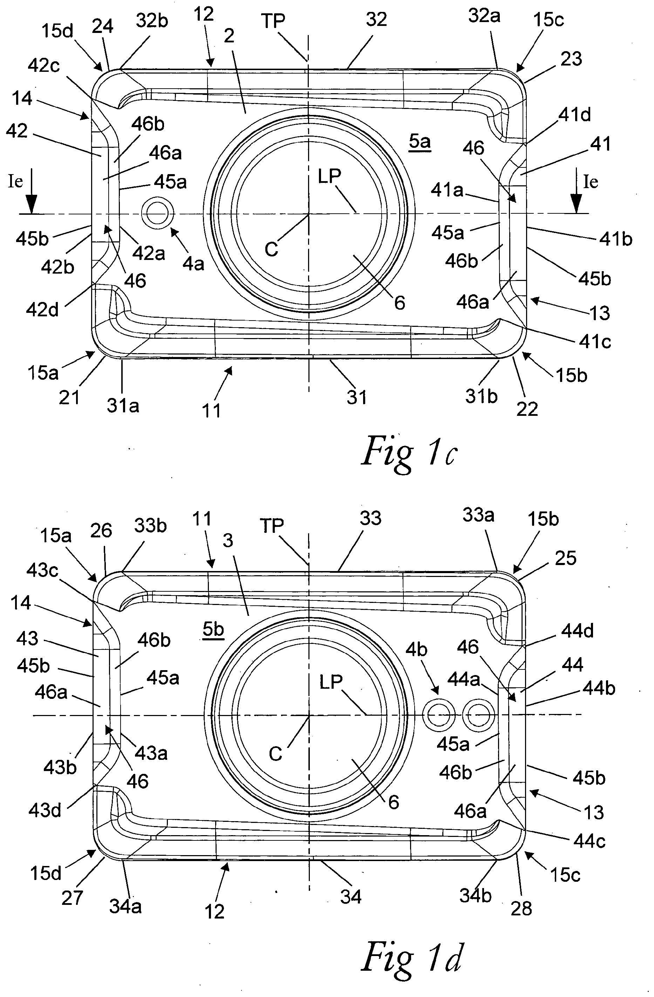

As seen along the centre axis C toward the first major face 2, i.e. as seen in view of Fig 1c, and as moving in the clockwise direction starting from the fourth corner cutting edge 24, the fourth corner cutting edge 24 is followed by the second main cutting edge 32 followed by the third corner cutting edge 23 followed by the inclined first chip guiding surface 41 followed by the second corner cutting edge 22 followed by the first main cutting edge 31 followed by the first corner cutting edge 21 followed by the inclined second chip guiding surface 42 followed by the fourth corner cutting edge 24. As seen along the centre axis C toward the second major face 3, i.e. as seen in view of Fig 1d, and as moving in the clockwise direction starting from the sixth corner cutting edge 26, the sixth corner cutting edge 26 is followed by the third main cutting edge 33 followed by the fifth corner cutting edge 25 followed by the inclined fourth chip guiding surface 44 followed by the curved eighth corner cutting edge 28 followed by the fourth main cutting edge 34 followed by the seventh corner cutting edge 27 followed by the inclined third chip guiding surface 43 followed by the sixth corner cutting edge 26. The illustrated right-hand embodiments of the double-sided cutting insert, are arranged such that when an insert is mounted in a right-hand cutting tool body, the first end of the active main cutting edge is arranged closer to the front end 51a of the tool body than the second end of the active main cutting edge.

A left-hand variant of the double-sided cutting insert (not illustrated) is arranged in the same way as the right-hand variant of the insert and the only difference is the mutual order of the side faces. In a left-hand variant the peripheral surface 10 is arranged such that when seen along the centre axis C toward the first major face 2, and when seen in the clockwise direction, the first main side face 11 is followed by the second corner side face 15b followed by the third main side face 13 followed by the third corner side face 15c followed by the second main side face 12 followed by the fourth corner side face 15d followed by the fourth main side face 14 followed by the first corner side face 15a followed by the first main side face 11. When this left-hand variant of the double-sided cutting insert is mounted in a left-hand milling tool body (not illustrated), the first end of the active main cutting edge is arranged closer to the front end of the tool body than the second end of the active main cutting edge.

The invention is of course not in any way restricted to the embodiments described above. On the contrary, many possibilities to modifications thereof will be apparent to a person with ordinary skill in the art without departing from the scope of the invention such as defined in the appended claims.

## Claims

1. A double-sided cutting insert for use in a helical milling cutter, the cutting insert (1) being turnable into four different working positions and comprising:
- first and second major faces (2, 3) arranged on opposite sides of the cutting insert (1) and serving as top and bottom faces of the cutting insert, the cutting insert (1) having a centre axis (C) that extends between the first and second major faces (2, 3) and a median plan (MP) that extends halfway between the first and second major faces (2, 3) perpendicularly to the centre axis (C), wherein the cutting insert (1) has an essentially rectangular basic shape when seen in a direction along the centre axis (C), and wherein each one of said first and second major faces (2, 3) comprises an abutment surface (5a, 5b) that is configured to serve as a tangential abutment surface of the cutting insert (1) in two of said working positions of the cutting insert and abut against a corresponding tangential support surface (63) in an insert seat (60) in a tool body (51) of a helical milling cutter when the cutting insert (1) is mounted in the insert seat in any of these two working positions;
- a peripheral surface (10) extending around the cutting insert (1) between the first and second major faces (2, 3) and comprising:
• a first main side face (11) and a second main side face (12) arranged opposite to each other on two opposite long sides of the cutting insert (1),
• a third main side face (13) and a fourth main side face (14) arranged opposite to each other on two opposite short sides of the cutting insert (1),
• a first corner side face (15a) arranged between the first and fourth main side faces (11, 14),
• a second corner side face (15b) arranged between the.first and third main side faces (11, 13),
• a third corner side face (15c) arranged between the second and third main side faces (12, 13), and
• a fourth corner side face (15d) arranged between the second and fourth main side faces (12, 14);
- a curved first corner cutting edge (21) formed at an intersection between the first corner side face (15a) and the first major face (2);
- a curved second corner cutting edge (22) formed at an intersection between the second corner side face (15b) and the first major face (2);
- a curved third corner cutting edge (23) formed at an intersection between the third corner side face (15c) and the first major face (2);
- a curved fourth corner cutting edge (24) formed at an intersection between the fourth corner side face (15d) and the first major face (2);
- a curved fifth corner cutting edge (25) formed at an intersection between the second corner side face (15b) and the second major face (3);
- a curved sixth corner cutting edge (26) formed at an intersection between the first corner side face (15a) and the second major face (3);
- a curved seventh corner cutting edge (27) formed at an intersection between the fourth corner side face (15d) and the second major face (3);
- a curved eighth corner cutting edge (28) formed at an intersection between the third corner side face (15c) and the second major face (3);
- a first main cutting edge (31) formed at an intersection between the first major face (2) and the first main side face (11), the first main cutting edge (31) extending between the first and second corner cutting edges (21, 22);
- a second main cutting edge (32) formed at an intersection between the first major face (2) and the second main side face (12), the second main cutting edge (32) extending between the third and fourth corner cutting edges (23, 24);
- a third main cutting edge (33) formed at an intersection between the second major face (3) and the first main side face (11), the third main cutting edge (33) extending between the fifth and sixth corner cutting edges (25 ,26); and
- a fourth main cutting edge (34) formed at an intersection between the second major face (3) and the second main side face (12), the fourth main cutting edge (34) extending between the seventh and eighth corner cutting edges (27, 28);
**characterized in:**
- **that** the cutting insert (1) comprises:
• an inclined first chip guiding surface (41) extending between the first major face (2) and the third main side face (13) and located between the second corner side face (15b) and the third corner side face (15c), the first chip guiding surface (41) having a first edge (41a) that forms a boundary between the first chip guiding surface and the first major face (2) and a second edge (41b) that forms a boundary between the first chip guiding surface and the third main side face (13), wherein the first chip guiding surface (41) is bounded by these first and second edges (41a, 41b) and the first edge (41a) meets the second edge (41b) at a first end (41c) of the first chip guiding surface facing the second corner cutting edge (22) and also at a second end (41d) of the first chip guiding surface facing the third corner cutting edge (23),
• an inclined second chip guiding surface (42) extending between the first major face (2) and the fourth main side face (14) and located between the first corner side face (15a) and the fourth corner side face (15d), the second chip guiding surface (42) having a first edge (42a) that forms a boundary between the second chip guiding surface and the first major face (2) and a second edge (42b) that forms a boundary between the second chip guiding surface and the fourth main side face (14), wherein the second chip guiding surface (42) is bounded by these first and second edges (42a, 42b) and the first edge (42a) meets the second edge (42b) at a first end (42c) of the second chip guiding surface facing the fourth corner cutting edge (24) and also at a second end (42d) of the second chip guiding surface facing the first corner cutting edge (21),
• an inclined third chip guiding surface (43) extending between the second major face (3) and the fourth main side face (14) and located between the first corner side face (15a) and the fourth corner side face (15d), the third chip guiding surface (43) having a first edge (43a) that forms a boundary between the third chip guiding surface and the second major face (3) and a second edge (43b) that forms a boundary between the third chip guiding surface and the fourth main side face (14), wherein the third chip guiding surface (43) is bounded by these first and second edges (43a, 43b) and the first edge meets (43a) the second edge (43b) at a first end (43c) of the third chip guiding surface facing the sixth corner cutting edge (26) and also at a second end (43d) of the third chip guiding surface facing the seventh corner cutting edge (27), and
• an inclined fourth chip guiding surface (44) extending between the second major face (3) and the third main side face (13) and located between the second corner side face (15b) and the third corner side face (15c), the fourth chip guiding surface (44) having a first edge (44a) that forms a boundary between the fourth chip guiding surface and the second major face (3) and a second edge (44b) that forms a boundary between the fourth chip guiding surface and the third main side face (13), wherein the fourth chip guiding surface (44) is bounded by these first and second edges (44a, 44b) and the first edge (44a) meets the second edge (44b) at a first end (44c) of the fourth chip guiding surface facing the eighth corner cutting edge (28) and also at a second end (44d) of the fourth chip guiding surface facing the fifth corner cutting edge (25);
- **that** each one of the first and second chip guiding surfaces (41, 42) intersects said abutment surface (5a) of the first major face (2) on both sides of a longitudinal plane (LP) of the cutting insert (1) that extends halfway between the first and second main side faces (11, 12) perpendicularly to the median plane (MP) and that contains the centre axis (C);
- **that** each one of the third and fourth chip guiding surfaces (43, 44) intersects said abutment surface (5b) of the second major face (3) on both sides of said longitudinal plane (LP); and
- **that** the cutting insert (1) has a transverse plane (TP) that extends halfway between the third and fourth main side faces (13, 14) perpendicularly to the median plane (MP) and perpendicularly to the longitudinal plane (LP) and that contains the centre axis (C), wherein each chip guiding surface of said first, second, third and fourth chip guiding surfaces (41, 42, 43, 44) has such an inclination in relation to the transverse plane (TP) that the first edge (41a, 42a, 43a, 44a) of the chip guiding surface is located closer to the transverse plane (TP) than the second edge (41b, 42b, 43b, 44b) of the same chip guiding surface as seen in the longitudinal plane (LP) and as seen in any plane that extends across the chip guiding surface and is parallel to the longitudinal plane (LP).

2. A double-sided cutting insert according to claim 1, **characterized in that** each one of the third and fourth main side faces (13, 14) has 180° rotational symmetry about a first imaginary reference axis (A1) that extends along a line of intersection between the median plane (MP) and the longitudinal plane (LP).

3. A double-sided cutting insert according to claim 1 or 2, **characterized in that** each one of the first and second main side faces (11, 12) has 180° rotational symmetry about a second imaginary reference axis (A2) that extends along a line of intersection between the median plane (MP) and the transverse plane (TP).

4. A double-sided cutting insert according to any of claims 1-3, **characterized in that** each one of the first and second major faces (2, 3) has 180° rotational symmetry about the centre axis (C).

5. A double-sided cutting insert according to any of claims 1-4, **characterized in:**
- **that** said abutment surface (5a) of the first major face (2) is flat and extends in a first plane (P1) that is parallel to the median plane (MP); and
- **that** said abutment surface (5b) of the second major face (3) is flat and extends in a second plane (P2) that is parallel to the median plane (MP).

6. A double-sided cutting insert according to claim 5, **characterized in:**
- **that** the first edge (41a) of the first chip guiding surface (41) and the first edge (42a) of the second chip guiding surface (42) are located in said first plane (P1); and
- **that** the first edge (43a) of the third chip guiding surface (43) and the first edge (44a) of the fourth chip guiding surface (44) are located in said second plane (P2).

7. A double-sided cutting insert according to any of claims 1-6, **characterized in:**
- **that** the first edge (41a, 42a, 43a, 44a) of each chip guiding surface of said first, second, third and fourth chip guiding surfaces (41, 42, 43, 44) comprises an essentially rectilinear central edge part (45a) that is located opposite to an essentially rectilinear central edge part (45b) of the second edge (41b, 42b, 43b, 44b) of the same chip guiding surface; and
- **that** each chip guiding surface of said first, second, third and fourth chip guiding surfaces (41, 42, 43, 44) has a central area (46) formed by the part of the chip guiding surface located between the central edge part (45a) of the first edge of the chip guiding surface and the central edge part (45b) of the second edge of the chip guiding surface, wherein this central area (46) consists of one or more sub surfaces (46a, 46a', 46b), each of which being convex as seen in any plane that extends across the sub surface in parallel with the longitudinal plane (LP) or being planar.

8. A double-sided cutting insert according to claim 7 in combination with claim 5, **characterized in:**
- **that** at least a major part of said central area (46) of each chip guiding surface of said first, second, third and fourth chip guiding surfaces (41, 42, 43, 44) consists of a planar major sub surface (46a);
- **that** the major sub surface (46a) of each one of the first and second chip guiding surfaces (41, 42) forms an angle (α) of 20-45°, preferably 35-45°, with said abutment surface (5a) of the first major face (2); and
- **that** the major sub surface (46a) of each one of the third and fourth chip guiding surfaces (43, 44) forms an angle (α) of 20-45°, preferably 35-45°, with said abutment surface (5b) of the second major face (3).

9. A double-sided cutting insert according to claim 8, **characterized in that** the longitudinal plane (LP) extends across the major sub surface (46a) of each chip guiding surface of said first, second, third and fourth chip guiding surfaces (41, 42, 43, 44).

10. A double-sided cutting insert according to any of claims 7-9, **characterized in that** the central edge part (45a) of the first edge of each chip guiding surface of said first, second, third and fourth chip guiding surfaces (41, 42, 43, 44) extends essentially in parallel with the central edge part (45b) of the second edge of the same chip guiding surface.

11. A double-sided cutting insert according to any of claims 1-10, **characterized in:**
- **that** the second edge (41b) of the first chip guiding surface (41) and the second edge (44b) of the fourth chip guiding surface (44) are located on opposite sides of the median plane (MP); and
- **that** the second edge (42b) of the second chip guiding surface (42) and the second edge (43b) of the third chip guiding surface (43) are located on opposite sides of the median plane (MP).

12. A double-sided cutting insert according to any of claims 1-11, **characterized in:**
- **that** the second corner cutting edge (22) is connected to the first chip guiding surface (41) at said first end (41c) of the first chip guiding surface;
- **that** the fourth corner cutting edge (24) is connected to the second chip guiding surface (42) at said first end (42c) of the second chip guiding surface;
- **that** the sixth corner cutting edge (26) is connected to the third chip guiding surface (43) at said first end (43c) of the third chip guiding surface; and
- **that** the eighth corner cutting edge (28) is connected to the fourth chip guiding surface (44) at said first end (44c) of the fourth chip guiding surface.

13. A double-sided cutting insert according to any of claims 1-12, **characterized in that** the cutting insert (1) is provided with a through hole (6), which extends centrally through the cutting insert between the first and second major faces (2, 3), wherein a centre axis of the through hole (6) coincides with the centre axis (C) of the cutting insert (1).

14. A double-sided cutting insert according to any of claims 1-13, **characterized in:**
- **that** the first main cutting edge (31) is inclined in relation to the median plane (MP) such that a first end (31a) of the first main cutting edge facing the first corner cutting edge (21) is located further away from the median plane (MP) than an opposite second end (31b) of the first main cutting edge facing the second corner cutting edge (22);
- **that** the second main cutting edge (32) is inclined in relation to the median plane (MP) such that a first end (32a) of the second main cutting edge facing the third corner cutting edge (23) is located further away from the median plane (MP) than an opposite second end (32b) of the second main cutting edge facing the fourth corner cutting edge (24);
- **that** the third main cutting edge (33) is inclined in relation to the median plane (MP) such that a first end (33a) of the third main cutting edge facing the fifth corner cutting edge (25) is located further away from the median plane (MP) than an opposite second end (33b) of the third main cutting edge facing the sixth corner cutting edge (26); and
- **that** the fourth main cutting edge (34) is inclined in relation to the median plane (MP) such that a first end (34a) of the fourth main cutting edge facing the seventh corner cutting edge (27) is located further away from the median plane (MP) than an opposite second end (34b) of the fourth main cutting edge facing the eighth corner cutting edge (28).

15. A double-sided cutting insert according to claim 14, **characterized in that** each main cutting edge of said first, second, third and, fourth main cutting edges (31 ,32, 33, 34) forms an angle (β) smaller than 6° with the median plane (MP).

16. A helical milling cutter comprising a plurality of double-sided cutting inserts (1) according to any of claims 1-15.

17. A helical milling cutter according to claim 16, **characterized in:**
- **that** the helical milling cutter comprises an elongated tool body (51) having a rear end (51b) and an opposite front end (51a), wherein a central longitudinal axis (53) of the tool body (51) extends between the rear end (51b) and the front end (51a) of the tool body and wherein the tool body (51) comprises:
• a rear part (54) located at the rear end (51b) of the tool body (51) and configured for attachment to a machine,
• a front surface (55) located at the front end (51a) of the tool body (51), and
• two or more chip flutes (57) formed in a peripheral surface (56) of the tool body (51) and extending alongside of each other along a part of the tool body (51) from the front surface (55) towards the rear part (54), the chip flutes (57) being separated from each other in the circumferential direction of the tool body (51), wherein each chip flute of said two or more chip flutes (57) extends in a helically curved path along the associated part of the tool body and has a leading face (57a) and an opposed trailing face (57b), and wherein each chip flute of said two or more chip flutes (57) is provided with an array of two or more insert seats (60) located one after the other along the trailing face (57b) of the chip flute (57) such that the insert seats (60) in the same array of insert seats are spaced from each other in a circumferential direction of the tool body (51) in a stepped manner;
- **that** double-sided cutting inserts (1) according to any of claims 1-15 are detachably mounted in a respective one of the insert seats (60) in said array of insert seats, each cutting insert (1) being mounted in the associated insert seat (60) with the abutment surface (5a, 5b) on one of the first and second major faces (2, 3) of the cutting insert serving as an active tangential abutment surface and abutting against a tangential support surface (63) in the insert seat, with one of the main cutting edges (31, 32, 33, 34) at the other one of the first and second major faces (2, 3) of the cutting insert serving as active main cutting edge and extending along a part of the peripheral surface (56) of the tool body (51), with one of the third and fourth main side faces (13, 14) of the cutting insert included in a forwardly facing end section (8a) of the cutting insert that faces the front end (51a) of the tool body (51) and with the other one of the third and fourth main side faces (13, 14) of the cutting insert included in a rearwardly facing end section (8b) of the cutting insert that faces the rear end (51b) of the tool body (51); and
- **that** the insert seats (60) in said array of insert seats are so positioned in relation to each other that the rearwardly facing end section (8b) of a cutting insert mounted in an insert seat (60) that is located axially forwardly of an adjacent insert seat (60) in the same array of insert seats and the forwardly facing end section (8a) of a cutting insert (1) mounted in this adjacent insert seat (60) at least partly overlap each other.

18. A helical milling cutter according claim 17, **characterized in that** each chip flute (57) of said two or more chip flutes is arranged in the tool body (51) with a positive helix angle, wherein the insert seats (60) in said array of insert seats are so positioned in relation to each other that an insert seat (60) that is located axially forwardly of an adjacent insert seat (60) in the same array of insert seats is also located rotationally forwardly of this adjacent insert seat (60) as seen in an intended direction of rotation (R) of the tool body (51).

19. A helical milling cutter according claim 17 or 18, **characterized in that** the leading face (57a) of at least one of said two or more chip flutes (57) is provided with at least one recess (66) located opposite to and facing the array of insert seats (60) provided in the trailing face (57b) of the same chip flute (57), wherein an axial length of this at least one recess (66) preferably is larger than 50% of a length of one of said first, second, third and fourth main cutting edges (31-34) of said cutting inserts (1), more preferably larger than this length.

## Patentansprüche

1. Doppelseitiger Schneideinsatz zur Verwendung in einem spiralförmigen Fräser, wobei der Schneideinsatz (1) in vier verschiedene Arbeitspositionen gedreht werden kann und Folgendes aufweist:
- erste und zweite Hauptflächen (2, 3), die auf gegenüberliegenden Seiten des Schneideinsatzes (1) angeordnet sind und als Ober- und Unterseite des Schneideinsatzes dienen, wobei der Schneideinsatz (1) eine Mittelachse (C) aufweist, die sich zwischen der ersten und zweiten Hauptfläche (2, 3) erstreckt, und eine Mittelebene (MP), die auf halbem Weg zwischen der ersten und zweiten Hauptfläche (2, 3) senkrecht zur Mittelachse (C) verläuft, wobei der Schneideinsatz (1) in einer Richtung entlang der Mittelachse (C) betrachtet eine im Wesentlichen rechteckige Grundform aufweist und wobei jede der ersten und zweiten Hauptflächen (2, 3) eine Anlagefläche (5a, 5b) aufweist, die so ausgebildet ist, dass sie in zwei der Arbeitspositionen des Schneideinsatzes als tangentiale Anlagefläche des Schneideinsatzes (1) dient und an einer entsprechenden tangentialen Stützfläche (63) in einem Einsatzsitz (60) in einem Werkzeugkörper (51) eines spiralförmigen Fräsers anliegt, wenn der Schneideinsatz (1) in einer dieser beiden Arbeitspositionen in dem Einsatzsitz montiert ist,
- eine Umfangsfläche (10), die sich zwischen der ersten und der zweiten Hauptfläche (2, 3) um den Schneideinsatz (1) herum erstreckt und Folgendes aufweist:
• eine erste Hauptseitenfläche (11) und eine zweite Hauptseitenfläche (12), die einander gegenüberliegend an zwei gegenüberliegenden Längsseiten des Schneideinsatzes (1) angeordnet sind,
• eine dritte Hauptseitenfläche (13) und eine vierte Hauptseitenfläche (14), die einander gegenüberliegend an zwei gegenüberliegenden kurzen Seiten des Schneideinsatzes (1) angeordnet sind,
• eine erste Eckseitenfläche (15a), die zwischen der ersten und vierten Hauptseitenfläche (11, 14) angeordnet ist,
• eine zweite Eckseitenfläche (15b), die zwischen der ersten und dritten Hauptseitenfläche (11, 13) angeordnet ist,
• eine dritte Eckseitenfläche (15c), die zwischen der zweiten und dritten Hauptseitenfläche (12, 13) angeordnet ist, und
• eine vierte Eckseitenfläche (15d), die zwischen der zweiten und vierten Hauptseitenfläche (12, 14) angeordnet ist,
- eine gekrümmte erste Eckschneidkante (21), die an einer Schnittstelle zwischen der ersten Eckseitenfläche (15a) und der ersten Hauptfläche (2) ausgebildet ist,
- eine gekrümmte zweite Eckschneidkante (22), die an einer Schnittstelle zwischen der zweiten Eckseitenfläche (15b) und der ersten Hauptfläche (2) ausgebildet ist,
- eine gekrümmte dritte Eckschneidkante (23), die an einer Schnittstelle zwischen der dritten Eckseitenfläche (15c) und der ersten Hauptfläche (2) ausgebildet ist,
- eine gekrümmte vierte Eckschneidkante (24), die an einer Schnittstelle zwischen der vierten Eckseitenfläche (15d) und der ersten Hauptfläche (2) ausgebildet ist,
- eine gekrümmte fünfte Eckschneidkante (25), die an einer Schnittstelle zwischen der zweiten Eckseitenfläche (15b) und der zweiten Hauptfläche (3) ausgebildet ist,
- eine gekrümmte sechste Eckschneidkante (26), die an einer Schnittstelle zwischen der ersten Eckseitenfläche (15a) und der zweiten Hauptfläche (3) ausgebildet ist,
- eine gekrümmte siebte Eckschneidkante (27), die an einer Schnittstelle zwischen der vierten Eckseitenfläche (15d) und der zweiten Hauptfläche (3) ausgebildet ist,
- eine gekrümmte achte Eckschneidkante (28), die an einer Schnittstelle zwischen der dritten Eckseitenfläche (15c) und der zweiten Hauptfläche (3) ausgebildet ist,
- eine erste Hauptschneidekante (31), die an einer Schnittstelle zwischen der ersten Hauptfläche (2) und der ersten Hauptseitenfläche (11) ausgebildet ist, wobei sich die erste Hauptschneidekante (31) zwischen der ersten und der zweiten Eckschneidkante (21, 22) erstreckt,
- eine zweite Hauptschneidekante (32), die an einer Schnittstelle zwischen der ersten Hauptfläche (2) und der zweiten Hauptseitenfläche (12) ausgebildet ist, wobei sich die zweite Hauptschneidekante (32) zwischen der dritten und vierten Eckschneidkante (23, 24) erstreckt,
- eine dritte Hauptschneidekante (33), die an einer Schnittstelle zwischen der zweiten Hauptfläche (3) und der ersten Hauptseitenfläche (11) ausgebildet ist, wobei sich die dritte Hauptschneidekante (33) zwischen der fünften und sechsten Eckschneidkante (25, 26) erstreckt, und
- eine vierte Hauptschneidekante (34), die an einer Schnittstelle zwischen der zweiten Hauptfläche (3) und der zweiten Hauptseitenfläche (12) ausgebildet ist, wobei sich die vierte Hauptschneidekante (34) zwischen der siebten und achten Eckschneidkante (27, 28) erstreckt,
**dadurch gekennzeichnet, dass**
- der Schneideinsatz (1) Folgendes aufweist:
• eine geneigte erste Spanleitfläche (41), die sich zwischen der ersten Hauptfläche (2) und der dritten Hauptseitenfläche (13) erstreckt und zwischen der zweiten Eckseitenfläche (15b) und der dritten Eckseitenfläche (15c) angeordnet ist, wobei die erste Spanleitfläche (41) eine erste Kante (41a) aufweist, die eine Grenze zwischen der ersten Spanleitfläche und der ersten Hauptfläche (2) bildet, und eine zweite Kante (41b) aufweist, die eine Grenze zwischen der ersten Spanleitfläche und der dritten Hauptseitenfläche (13) bildet, wobei die erste Spanleitfläche (41) durch diese erste und zweite Kante begrenzt ist (41a, 41b) und die erste Kante (41a) auf die zweite Kante (41b) an einem ersten Ende (41c) der ersten Spanleitfläche trifft, das der zweiten Eckschneidkante (22) zugewandt ist, sowie an einem zweiten Ende (41d) der ersten Spanleitfläche, das der dritten Eckschneidkante (23) zugewandt ist,
• eine geneigte zweite Spanleitfläche (42), die sich zwischen der ersten Hauptfläche (2) und der vierten Hauptseitenfläche (14) erstreckt und zwischen der ersten Eckseitenfläche (15a) und der vierten Eckseitenfläche (15d) angeordnet ist, wobei die zweite Spanleitfläche (42) eine erste Kante (42a), die eine Grenze zwischen der zweiten Spanleitfläche und der ersten Hauptfläche (2) bildet, und eine zweite Kante (42b) aufweist, die eine Grenze zwischen der zweiten Spanleitfläche und der vierten Hauptseitenfläche (14) bildet, wobei die zweite Spanleitfläche (42) durch diese erste und zweite Kante (42a, 42b) begrenzt ist und die erste Kante (42a) auf die zweite Kante (42b) an einem ersten Ende (42c) der zweiten Spanleitfläche trifft, das der vierten Eckschneidkante (24) zugewandt ist, und auch an einem zweiten Ende (42d) der zweiten Spanleitfläche, das der ersten Eckschneidkante (21) zugewandt ist,
• eine geneigte dritte Spanleitfläche (43), die sich zwischen der zweiten Hauptfläche (3) und der vierten Hauptseitenfläche (14) erstreckt und zwischen der ersten Eckseitenfläche (15a) und der vierten Eckseitenfläche (15d) angeordnet ist, wobei die dritte Spanleitfläche (43) eine erste Kante (43a), die eine Grenze zwischen der dritten Spanleitfläche und der zweiten Hauptfläche (3) bildet, und eine zweite Kante (43b) aufweist, die eine Grenze zwischen der dritten Spanleitfläche und der vierten Hauptseitenfläche (14) bildet, wobei die dritte Spanleitfläche (43) durch diese erste und zweite Kante begrenzt ist (43a, 43b) und die erste Kante (43a) auf die zweite Kante (43b) an einem ersten Ende (43c) der dritten Spanleitfläche trifft, das der sechsten Eckschneidkante (26) zugewandt ist, und auch an einem zweiten Ende (43d) der dritten Spanleitfläche, das der siebten Eckschneidkante (27) zugewandt ist, und
• eine geneigte vierte Spanleitfläche (44), die sich zwischen der zweiten Hauptfläche (3) und der dritten Hauptseitenfläche (13) erstreckt und zwischen der zweiten Eckseitenfläche (15b) und der dritten Eckseitenfläche (15c) angeordnet ist, wobei die vierte Spanleitfläche (44) eine erste Kante (44a), die eine Grenze zwischen der vierten Spanleitfläche und der zweiten Hauptfläche (3) bildet, und eine zweite Kante (44b) aufweist, die eine Grenze zwischen der vierten Spanleitfläche und der dritten Hauptseitenfläche (13) bildet, wobei die vierte Spanleitfläche (44) durch diese erste und zweite Kante begrenzt ist (44a, 44b) und die erste Kante (44a) auf die zweite Kante (44b) an einem ersten Ende (44c) der vierten Spanleitfläche trifft, das der achten Eckschneidkante (28) zugewandt ist, und auch an einem zweiten Ende (44d) der vierten Spanleitfläche, das der fünften Eckschneidkante (25) zugewandt ist,
- dass jede der ersten und zweiten Spanleitflächen (41, 42) die Anlagefläche (5a) der ersten Hauptfläche (2) auf beiden Seiten einer Längsebene (LP) des Schneideinsatzes (1) schneidet, die sich auf halbem Weg zwischen der ersten und zweiten Hauptseitenfläche (11, 12) senkrecht zur Mittelebene (MP) erstreckt und die Mittelachse (C) enthält,
- dass jede der dritten und vierten Spanleitflächen (43, 44) die Anlagefläche (5b) der zweiten Hauptfläche (3) auf beiden Seiten der Längsebene (LP) schneidet, und
- dass der Schneideinsatz (1) eine Querebene (TP) aufweist, die sich in der Mitte zwischen der dritten und vierten Hauptseitenfläche (13, 14) senkrecht zur Mittelebene (MP) und senkrecht zur Längsebene (LP) erstreckt und die Mittelachse (C) enthält, wobei jede Spanleitfläche der ersten, zweiten, dritten und vierten Spanleitfläche (41, 42, 43, 44) eine solche Neigung in Bezug auf die Querebene (TP) aufweist, dass die erste Kante (41a, 42a, 43a, 44a) der Spanleitfläche näher an der Querebene (TP) liegt als die zweite Kante (41b, 42b, 43b, 44b) derselben Spanleitfläche, betrachtet in der Längsebene (LP) und betrachtet in jeder Ebene, die sich über die Spanleitfläche erstreckt und parallel zur Längsebene (LP) ist.

2. Doppelseitiger Schneideinsatz gemäß Anspruch 1, **dadurch gekennzeichnet, dass** jede der dritten und vierten Hauptseitenflächen (13, 14) eine 180°-Drehsymmetrie um eine erste imaginäre Referenzachse (A1) aufweist, die sich entlang einer Schnittlinie zwischen der Mittelebene (MP) und der Längsebene (LP) erstreckt.

3. Doppelseitiger Schneideinsatz nach Anspruch 1 oder 2, **dadurch gekennzeichnet, dass** jede der ersten und zweiten Hauptseitenflächen (11, 12) eine 180°-Drehsymmetrie um eine zweite imaginäre Bezugsachse (A2) aufweist, die sich entlang einer Schnittlinie zwischen der Mittelebene (MP) und der Querebene (TP) erstreckt.

4. Doppelseitiger Schneideinsatz nach einem der Ansprüche 1 bis 3, **dadurch gekennzeichnet, dass** jede der ersten und zweiten Hauptflächen (2, 3) eine 180°-Rotationssymmetrie um die Mittelachse (C) aufweist.

5. Doppelseitiger Schneideinsatz nach einem der Ansprüche 1 bis 4, **dadurch gekennzeichnet, dass**
- die Anlagefläche (5a) der ersten Hauptfläche (2) flach ist und sich in einer ersten Ebene (P1) erstreckt, die parallel zur Mittelebene (MP) ist, und
- die Anlagefläche (5b) der zweiten Hauptfläche (3) flach ist und sich in einer zweiten Ebene (P2) erstreckt, die parallel zur Mittelebene (MP) ist.

6. Doppelseitiger Schneideinsatz gemäß Anspruch 5, **dadurch gekennzeichnet, dass**
- die erste Kante (41a) der ersten Spanleitfläche (41) und die erste Kante (42a) der zweiten Spanleitfläche (42) in der ersten Ebene (P1) liegen, und
- die erste Kante (43a) der dritten Spanleitfläche (43) und die erste Kante (44a) der vierten Spanleitfläche (44) in der zweiten Ebene (P2) liegen.

7. Doppelseitiger Schneideinsatz gemäß einem der Ansprüche 1 bis 6, **dadurch gekennzeichnet, dass**
- die erste Kante (41a, 42a, 43a, 44a) jeder Spanleitfläche der ersten, zweiten, dritten und vierten Spanleitfläche (41, 42, 43, 44) einen im Wesentlichen geradlinigen mittleren Kantenabschnitt (45a) aufweist, der einem im Wesentlichen geradlinigen mittleren Kantenabschnitt (45b) der zweiten Kante (41b, 42b, 43b, 44b) derselben Spanleitfläche gegenüberliegt, und
- jede Spanleitfläche der ersten, zweiten, dritten und vierten Spanleitfläche (41, 42, 43, 44) einen mittleren Bereich (46) aufweist, der durch den Teil der Spanleitfläche gebildet ist, der zwischen dem mittleren Kantenabschnitt (45a) der ersten Kante der Spanleitfläche und dem mittleren Kantenabschnitt (45b) der zweiten Kante der Spanleitfläche angeordnet ist, wobei dieser mittlere Bereich (46) aus einer oder mehreren Teilflächen (46a, 46a', 46b), von denen jede betrachtet in jeder Ebene, die sich parallel zur Längsebene (LP) über die Teilfläche erstreckt, konvex oder planar ist.

8. Doppelseitiger Schneideinsatz gemäß Anspruch 7, in Kombination mit Anspruch 5, **dadurch gekennzeichnet, dass**:
- wenigstens ein Großteil des genannten zentralen Bereichs (46) jeder Spanleitfläche der ersten, zweiten, dritten und vierten Spanleitfläche (41, 42, 43, 44) aus einer planaren Hauptunterfläche besteht (46a),
- die Hauptoberfläche (46a) jeder der ersten und zweiten Spanleitflächen (41, 42) einen Winkel (α) von 20-45°, vorzugsweise 35-45°, mit der Anlagefläche (5a) der ersten Hauptoberfläche (2) bildet, und
- die Hauptunterfläche (46a) jeder der dritten und vierten Spanleitflächen (43, 44) einen Winkel (α) von 20-45°, vorzugsweise 35-45°, mit der Anlagefläche (5b) der zweiten Hauptfläche (3) bildet.

9. Doppelseitiger Schneideinsatz nach Anspruch 8, **dadurch gekennzeichnet, dass** die Längsebene (LP) sich über die Hauptnebenfläche (46a) jeder Spanleitfläche der ersten, zweiten, dritten und vierten Spanleitfläche (41, 42, 43, 44) erstreckt.

10. Doppelseitiger Schneideinsatz nach einem der Ansprüche 7 bis 9, **dadurch gekennzeichnet, dass** der mittlere Kantenabschnitt (45a) der ersten Kante jeder Spanleitfläche der ersten, zweiten, dritten und vierten Spanleitfläche (41, 42, 43, 44) im Wesentlichen parallel zum mittleren Kantenabschnitt (45b) der zweiten Kante derselben Spanleitfläche verläuft.

11. Doppelseitiger Schneideinsatz nach einem der Ansprüche 1 bis 10, **dadurch gekennzeichnet, dass**
- die zweite Kante (41b) der ersten Spanleitfläche (41) und die zweite Kante (44b) der vierten Spanleitfläche (44) auf gegenüberliegenden Seiten der Mittelebene (MP) angeordnet sind, und
- die zweite Kante (42b) der zweiten Spanleitfläche (42) und die zweite Kante (43b) der dritten Spanleitfläche (43) auf gegenüberliegenden Seiten der Mittelebene (MP) angeordnet sind.

12. Doppelseitiger Schneideinsatz nach einem der Ansprüche 1 bis 11, **dadurch gekennzeichnet, dass**
- die zweite Eckschneidkante (22) an dem ersten Ende (41c) der ersten Spanleitfläche mit der ersten Spanleitfläche (41) verbunden ist,
- die vierte Eckschneidkante (24) mit der zweiten Spanleitfläche (42) an dem ersten Ende (42c) der zweiten Spanleitfläche verbunden ist,
- die sechste Eckschneidkante (26) mit der dritten Spanleitfläche (43) an dem ersten Ende (43c) der dritten Spanleitfläche verbunden ist, und
- die achte Eckschneidkante (28) mit der vierten Spanführungsfläche (44) an dem ersten Ende (44c) der vierten Spanführungsfläche verbunden ist.

13. Doppelseitiger Schneideinsatz gemäß einem der Ansprüche 1 bis 12, **dadurch gekennzeichnet, dass** der Schneideinsatz (1) mit einem Durchgangsloch (6) versehen ist, das sich mittig durch den Schneideinsatz zwischen der ersten und der zweiten Hauptfläche (2, 3) erstreckt, wobei eine Mittelachse des Durchgangslochs (6) mit der Mittelachse (C) des Schneideinsatzes (1) zusammenfällt.

14. Doppelseitiger Schneideinsatz nach einem der Ansprüche 1 bis 13, **dadurch gekennzeichnet, dass**
- die erste Hauptschneidekante (31) in Bezug auf die Mittelebene (MP) derart geneigt ist, dass ein erstes Ende (313) der ersten Hauptschneidekante, das der ersten Eckschneidkante (21) zugewandt ist, weiter von der Mittelebene (MP) entfernt ist als ein gegenüberliegendes zweites Ende (31b) der ersten Hauptschneidekante, das der zweiten Eckschneidkante (22) zugewandt ist,
- die zweite Hauptschneidekante (32) in Bezug auf die Mittelebene (MP) so geneigt ist, dass ein erstes Ende (32a) der zweiten Hauptschneidekante, das der dritten Eckschneidkante (23) zugewandt ist, weiter von der Mittelebene (MP) entfernt ist als ein gegenüberliegendes zweites Ende (32b) der zweiten Hauptschneidekante, das der vierten Eckschneidkante (24) zugewandt ist,
- die dritte Hauptschneidekante (33) in Bezug auf die Mittelebene (MP) derart geneigt ist, dass ein erstes Ende (33a) der dritten Hauptschneidekante, das der fünften Eckschneidkante (25) zugewandt ist, weiter von der Mittelebene (MP) entfernt ist als ein gegenüberliegendes zweites Ende (33b) der dritten Hauptschneidekante, das der sechsten Eckschneidkante (26) zugewandt ist, und
- die vierte Hauptschneidekante (34) in Bezug auf die Mittelebene (MP) derart geneigt ist, dass ein erstes Ende (34a) der vierten Hauptschneidekante, das der siebten Eckschneidkante (27) zugewandt ist, weiter von der Mittelebene (MP) entfernt ist als ein gegenüberliegendes zweites Ende (34b) der vierten Hauptschneidekante, das der achten Eckschneidkante (28) zugewandt ist.

15. Doppelseitiger Schneideinsatz gemäß Anspruch 14, **dadurch gekennzeichnet, dass** jede Hauptschneidekante der ersten, zweiten, dritten und vierten Hauptschneidekanten (31, 32, 33, 34) einen Winkel (β) von weniger als 6° mit der Mittelebene (MP) bildet.

16. Spiralfräser mit mehreren doppelseitigen Schneideinsätzen (1) gemäß einem der Ansprüche 1 bis 15.

17. Spiralfräser gemäß Anspruch 16, **dadurch gekennzeichnet, dass**
- der spiralförmige Fräser einen länglichen Werkzeugkörper (51) mit einem hinteren Ende (51b) und einem gegenüberliegenden vorderen Ende (51a) wobei sich eine zentrale Längsachse (53) des Werkzeugkörpers (51) zwischen dem hinteren Ende (51b) und dem vorderen Ende (51a) des Werkzeugkörpers erstreckt und wobei der Werkzeugkörper (51) Folgendes aufweist:
• einen hinteren Teil (54), der am hinteren Ende (51b) des Werkzeugkörpers (51) angeordnet und zur Befestigung an einer Maschine ausgebildet ist,
• eine an dem vorderen Ende (51a) des Werkzeugkörpers (51) angeordnete vordere Fläche (55) und
• zwei oder mehr Span-Nuten (57), die in einer Umfangsfläche (56) des Werkzeugkörpers (51) ausgebildet sind und sich entlang eines Teils des Werkzeugkörpers (51) von der Vorderseite (55) zum hinteren Teil (54) nebeneinander erstrecken, wobei die Span-Nuten (57) in Umfangsrichtung des Werkzeugkörpers (51) voneinander getrennt sind, wobei jede Span-Nut der beiden oder mehrerer Span-Nuten (57) sich in einer spiralförmig gekrümmten Bahn entlang des zugehörigen Teils des Werkzeugkörpers erstreckt und eine vordere Fläche (57a) und eine gegenüberliegende hintere Fläche (57b) aufweist, und wobei jede Span-Nut der beiden oder mehrerer Span-Nuten (57) mit einer Anordnung von zwei oder mehr Einsatzsitzen (60) versehen ist, die entlang der hinteren Fläche (57b) der Span-Nut (57) hintereinander angeordnet sind, so dass die Einsatzsitze (60) in derselben Anordnung von Einsatzsitzen in Umfangsrichtung des Werkzeugkörpers (51) stufenförmig voneinander beabstandet sind,
- doppelseitige Schneideinsätze (1) gemäß einem der Ansprüche 1 bis 15 in einem jeweiligen der Einsatzsitze (60) in der Anordnung von Einsatzsitzen lösbar angebracht sind, wobei jeder Schneideinsatz (1) in dem zugehörigen Einsatzsitz (60) mit der Anlagefläche (5a, 5b) an einer der ersten und zweiten Hauptflächen (2, 3) des Schneideinsatzes als aktive tangentiale Anlagefläche dient und an einer tangentialen Stützfläche (63) im Einsatzsitz anliegt, wobei eine der Hauptschneiden (31, 32, 33, 34) an der anderen der ersten und zweiten Hauptflächen (2, 3) des Schneideinsatzes als aktive Hauptschneidekante und sich entlang eines Teils der Umfangsfläche (56) des Werkzeugkörpers (51) erstreckt, wobei eine der dritten und vierten Hauptseitenflächen (13, 14) des Schneideinsatzes in einem nach vorne gerichteten Endabschnitt (8a) des Schneideinsatzes enthalten ist, der der Vorderseite (51a) des Werkzeugkörpers (51) zugewandt ist, und wobei die andere der dritten und vierten Hauptseitenflächen (13, 14) des Schneideinsatzes in einem nach hinten gerichteten Endabschnitt (8b) des Schneideinsatzes enthalten ist, der dem hinteren Ende (51b) des Werkzeugkörpers (51) zugewandt ist, und
- die Einsatzsitze (60) in der Anordnung von Einsatzsitzen so zueinander positioniert sind, dass der nach hinten gerichtete Endabschnitt (8b) eines Schneideinsatzes, der in einem Einsatzsitz (60) montiert ist, der axial vor einem benachbarten Einsatzsitz (60) in derselben Anordnung von Einsatzsitzen angeordnet ist, und der nach vorne gerichtete Endabschnitt (8a) eines Schneideinsatzes (1), der in diesem benachbarten Einsatzsitz (60) montiert ist, sich zumindest teilweise überlappen.

18. Spiralfräser nach Anspruch 17, **dadurch gekennzeichnet, dass** jede Span-Nut (57) der zwei oder mehr Span-Nuten im Werkzeugkörper (51) mit einem positiven Spiralwinkel angeordnet ist, wobei die Einsatzsitze (60) in der Anordnung von Einsatzsitzen so zueinander positioniert sind, dass ein Einsatzsitz (60), der in derselben Anordnung von Einsatzsitzen axial vor einem benachbarten Einsatzsitz (60) liegt, in einer vorgesehenen Drehrichtung (R) des Werkzeugkörpers (51) auch rotatorisch vor diesem benachbarten Einsatzsitz (60) liegt.

19. Spiralfräser nach Anspruch 17 oder 18, **dadurch gekennzeichnet, dass** die Vorderfläche (57a) wenigstens einer der zwei oder mehr Span-Nuten (57) mit wenigstens einer Ausnehmung (66) versehen ist, die gegenüber der Anordnung von Einsatzsitzen (60) in der Rückfläche (57b) derselben Span-Nut (57) angeordnet ist und dieser zugewandt ist, wobei eine axiale Länge dieser wenigstens einen Aussparung (66) vorzugsweise größer als 50 % einer Länge einer der ersten, zweiten, dritten und vierten Hauptschneidkanten (31-34) der Schneideinsätze (1) ist, noch bevorzugter größer als diese Länge.

## Revendications

1. Plaquette de coupe double face destinée à être utilisée dans une fraise hélicoïdale, la plaquette de coupe (1) pouvant être tournée dans quatre positions de travail différentes et comprenant :
- des première et seconde faces principales (2, 3) agencées sur des côtés opposés de la plaquette de coupe (1) et servant de faces supérieure et inférieure de la plaquette de coupe, la plaquette de coupe (1) présentant un axe central (C) qui s'étend entre les première et seconde faces principales (2, 3) et un plan médian (MP) qui s'étend à mi-chemin entre les première et seconde faces principales (2, 3) perpendiculairement à l'axe central (C), où la plaquette de coupe (1) a une forme de base essentiellement rectangulaire lorsqu'elle est observée dans une direction le long de l'axe central (C), et où chacune desdites première et seconde faces principales (2, 3) comprend une surface de butée (5a, 5b) qui est configurée pour servir de surface de butée tangentielle de la plaquette de coupe (1) dans deux desdites positions de travail de la plaquette de coupe et bute contre une surface de support tangentielle correspondante (63) dans un siège de plaquette (60) dans un corps d'outil (51) d'une fraise hélicoïdale lorsque la plaquette de coupe (1) est montée dans le siège de plaquette dans l'une quelconque de ces deux positions de travail ;
- une surface périphérique (10) s'étendant autour de la plaquette de coupe (1) entre les première et seconde faces principales (2, 3) et comprenant :
• une première face latérale principale (11) et une deuxième face latérale principale (12) agencées de manière opposée l'une par rapport à l'autre sur deux côtés longs opposés de la plaquette de coupe (1),
• une troisième face latérale principale (13) et une quatrième face latérale principale (14) agencées de manière opposée l'une par rapport à l'autre sur deux côtés courts opposés de la plaquette de coupe (1),
• une première face latérale de coin (15a) agencée entre les première et quatrième faces latérales principales (11, 14),
• une deuxième face latérale de coin (15b) agencée entre les première et troisième faces latérales principales (11, 13),
• une troisième face latérale de coin (15c) agencée entre les deuxième et troisième faces latérales principales (12, 13), et
• une quatrième face latérale de coin (15d) agencée entre les deuxième et quatrième faces latérales principales (12, 14) ;
- une première arête de coupe de coin incurvée (21) formée à une intersection entre la première face latérale de coin (15a) et la première face principale (2) ;
- une deuxième arête de coupe de coin incurvée (22) formée à une intersection entre la deuxième face latérale de coin (15b) et la première face principale (2) ;
- une troisième arête de coupe de coin incurvée (23) formée à une intersection entre la troisième face latérale de coin (15c) et la première face principale (2) ;
- une quatrième arête de coupe de coin incurvée (24) formée à une intersection entre la quatrième face latérale de coin (15d) et la première face principale (2) ;
- une cinquième arête de coupe de coin incurvée (25) formée à une intersection entre la deuxième face latérale de coin (15b) et la seconde face principale (3) ;
- une sixième arête de coupe de coin incurvée (26) formée à une intersection entre la première face latérale de coin (15a) et la seconde face principale (3) ;
- une septième arête de coupe de coin incurvée (27) formée à une intersection entre la quatrième face latérale de coin (15d) et la seconde face principale (3) ;
- une huitième arête de coupe de coin incurvée (28) formée à une intersection entre la troisième face latérale de coin (15c) et la seconde face principale (3) ;
- une première arête de coupe principale (31) formée à une intersection entre la première face principale (2) et la première face latérale principale (11), la première arête de coupe principale (31) s'étendant entre les première et deuxième arêtes de coupe de coin (21, 22) ;
- une deuxième arête de coupe principale (32) formée à une intersection entre la première face principale (2) et la deuxième face latérale principale (12), la deuxième arête de coupe principale (32) s'étendant entre les troisième et quatrième arêtes de coupe de coin (23, 24) ;
- une troisième arête de coupe principale (33) formée à une intersection entre la seconde face principale (3) et la première face latérale principale (11), la troisième arête de coupe principale (33) s'étendant entre les cinquième et sixième arêtes de coupe de coin (25, 26) ; et
- une quatrième arête de coupe principale (34) formée à une intersection entre la seconde face principale (3) et la deuxième face latérale principale (12), la quatrième arête de coupe principale (34) s'étendant entre les septième et huitième arêtes de coupe de coin (27, 28) ;
**caractérisée en ce :**
- **que** la plaquette de coupe (1) comprend :
• une première surface de guidage de copeaux inclinée (41) s'étendant entre la première face principale (2) et la troisième face latérale principale (13) et située entre la deuxième face latérale de coin (15b) et la troisième face latérale de coin (15c), la première surface de guidage de copeaux (41) présentant une première arête (41a) qui forme une limite entre la première surface de guidage de copeaux et la première face principale (2) et une seconde arête (41b) qui forme une limite entre la première surface de guidage de copeaux et la troisième face latérale principale (13), où la première surface de guidage de copeaux (41) est délimitée par ces première et seconde arêtes (41a, 41b) et la première arête (41a) rencontre la seconde arête (41b) au niveau d'une première extrémité (41c) de la première surface de guidage de copeaux faisant face à la deuxième arête de coupe de coin (22) et également au niveau d'une seconde extrémité (41d) de la première surface de guidage de copeaux faisant face à la troisième arête de coupe de coin (23),
• une deuxième surface de guidage de copeaux inclinée (42) s'étendant entre la première face principale (2) et la quatrième face latérale principale (14) et située entre la première face latérale de coin (15a) et la quatrième face latérale de coin (15d), la deuxième surface de guidage de copeaux (42) présentant une première arête (42a) qui forme une limite entre la deuxième surface de guidage de copeaux et la première face principale (2) et une seconde arête (42b) qui forme une limite entre la deuxième surface de guidage de copeaux et la quatrième face latérale principale (14), où la deuxième surface de guidage de copeaux (42) est délimitée par ces première et seconde arêtes (42a, 42b) et la première arête (42a) rencontre la seconde arête (42b) au niveau d'une première extrémité (42c) de la deuxième surface de guidage de copeaux faisant face à la quatrième arête de coupe de coin (24) et également au niveau d'une seconde extrémité (42d) de la deuxième surface de guidage de copeaux faisant face à la première arête de coupe de coin (21),
• une troisième surface de guidage de copeaux inclinée (43) s'étendant entre la seconde face principale (3) et la quatrième face latérale principale (14) et située entre la première face latérale de coin (15a) et la quatrième face latérale de coin (15d), la troisième surface de guidage de copeaux (43) présentant une première arête (43a) qui forme une limite entre la troisième surface de guidage de copeaux et la seconde face principale (3) et une seconde arête (43b) qui forme une limite entre la troisième surface de guidage de copeaux et la quatrième face latérale principale (14), où la troisième surface de guidage de copeaux (43) est délimitée par ces première et seconde arêtes (43a, 43b) et la première arête (43a) rencontre la seconde arête (43b) au niveau d'une première extrémité (43c) de la troisième surface de guidage de copeaux faisant face à la sixième arête de coupe de coin (26) et également au niveau d'une seconde extrémité (43d) de la troisième surface de guidage de copeaux faisant face à la septième arête de coupe de coin (27), et
• une quatrième surface de guidage de copeaux inclinée (44) s'étendant entre la seconde face principale (3) et la troisième face latérale principale (13) et située entre la deuxième face latérale de coin (15b) et la troisième face latérale de coin (15c), la quatrième surface de guidage de copeaux (44) présentant une première arête (44a) qui forme une limite entre la quatrième surface de guidage de copeaux et la seconde face principale (3) et une seconde arête (44b) qui forme une limite entre la quatrième surface de guidage de copeaux et la troisième face latérale principale (13), où la quatrième surface de guidage de copeaux (44) est délimitée par ces première et seconde arêtes (44a, 44b) et la première arête (44a) rencontre la seconde arête (44b) au niveau d'une première extrémité (44c) de la quatrième surface de guidage de copeaux faisant face à la huitième arête de coupe de coin (28) et également au niveau d'une seconde extrémité (44d) de la quatrième surface de guidage de copeaux faisant face à la cinquième arête de coupe de coin (25) ;
- **que** chacune des première et deuxième surfaces de guidage de copeaux (41, 42) coupe ladite surface de butée (5a) de la première face principale (2) des deux côtés d'un plan longitudinal (LP) de la plaquette de coupe (1) qui s'étend à mi-chemin entre les première et deuxième faces latérales principales (11, 12) perpendiculairement au plan médian (MP) et qui contient l'axe central (C) ;
- **que** chacune des troisième et quatrième surfaces de guidage de copeaux (43, 44) coupe ladite surface de butée (5b) de la seconde face principale (3) des deux côtés dudit plan longitudinal (LP) ; et
- **que** la plaquette de coupe (1) présente un plan transversal (TP) qui s'étend à mi-chemin entre les troisième et quatrième faces latérales principales (13, 14) perpendiculairement au plan médian (MP) et perpendiculairement au plan longitudinal (LP) et qui contient l'axe central (C), où chaque surface de guidage de copeaux desdites première, deuxième, troisième et quatrième surfaces de guidage de copeaux (41, 42, 43, 44) présente une inclinaison par rapport au plan transversal (TP) telle que la première arête (41a, 42a, 43a, 44a) de la surface de guidage de copeaux est située plus près du plan transversal (TP) que la seconde arête (41b, 42b, 43b, 44b) de la même surface de guidage de copeaux lorsqu'elle est observée dans le plan longitudinal (LP) et lorsqu'elle observée dans tout plan qui s'étend en travers de la surface de guidage de copeaux et est parallèle au plan longitudinal (LP).

2. Plaquette de coupe double face selon la revendication 1, **caractérisée en ce que** chacune des troisième et quatrième faces latérales principales (13, 14) présente une symétrie par rotation à 180° autour d'un premier axe de référence imaginaire (A1) qui s'étend le long d'une droite d'intersection entre le plan médian (MP) et le plan longitudinal (LP).

3. Plaquette de coupe double face selon la revendication 1 ou 2, **caractérisée en ce que** chacune des première et deuxième faces latérales principales (11, 12) présente une symétrie par rotation à 180° autour d'un second axe de référence imaginaire (A2) qui s'étend le long d'une droite d'intersection entre le plan médian (MP) et le plan transversal (TP).

4. Plaquette de coupe double face selon l'une quelconque des revendications 1 à 3, **caractérisée en ce que** chacune des première et seconde faces principales (2, 3) présente une symétrie par rotation à 180° autour de l'axe central (C).

5. Plaquette de coupe double face selon l'une quelconque des revendications 1 à 4, **caractérisée en ce :**
- **que** ladite surface de butée (5a) de la première face principale (2) est plane et s'étend dans un premier plan (P1) qui est parallèle au plan médian (MP) ; et
- **que** ladite surface de butée (5b) de la seconde face principale (3) est plane et s'étend dans un second plan (P2) qui est parallèle au plan médian (MP).

6. Plaquette de coupe double face selon la revendication 5, **caractérisée en ce :**
- **que** la première arête (41a) de la première surface de guidage de copeaux (41) et la première arête (42a) de la deuxième surface de guidage de copeaux (42) sont situées dans ledit premier plan (P1) ; et
- **que** la première arête (43a) de la troisième surface de guidage de copeaux (43) et la première arête (44a) de la quatrième surface de guidage de copeaux (44) sont situées dans ledit second plan (P2).

7. Plaquette de coupe double face selon l'une quelconque des revendications 1 à 6, **caractérisée en ce :**
- **que** la première arête (41a, 42a, 43a, 44a) de chaque surface de guidage de copeaux desdites première, deuxième, troisième et quatrième surfaces de guidage de copeaux (41, 42, 43, 44) comprend une partie d'arête centrale essentiellement rectiligne (45a) qui est située de manière opposée à une partie d'arête centrale essentiellement rectiligne (45b) de la seconde arête (41b, 42b, 43b, 44b) de la même surface de guidage de copeaux ; et
- **que** chaque surface de guidage de copeaux desdites première, deuxième, troisième et quatrième surfaces de guidage de copeaux (41, 42, 43, 44) présente une zone centrale (46) formée par la partie de la surface de guidage de copeaux située entre la partie d'arête centrale (45a) de la première arête de la surface de guidage de copeaux et la partie d'arête centrale (45b) de la seconde arête de la surface de guidage de copeaux, où cette zone centrale (46) se compose d'une ou plusieurs sous-surfaces (46a, 46a', 46b), chacune desquelles étant convexe lorsqu'elles sont observées dans tout plan qui s'étend en travers de la sous-surface parallèlement au plan longitudinal (LP) ou étant plane.

8. Plaquette de coupe double face selon la revendication 7 en combinaison avec la revendication 5, **caractérisée en ce :**
- **qu'**au moins une majeure partie de ladite zone centrale (46) de chaque surface de guidage de copeaux desdites première, deuxième, troisième et quatrième surfaces de guidage de copeaux (41, 42, 43, 44) se compose d'une sous-surface principale plane (46a) ;
- **que** la sous-surface principale (46a) de chacune des première et deuxième surfaces de guidage de copeaux (41, 42) forme un angle (α) de 20 à 45°, de préférence de 35 à 45°, avec ladite surface de butée (5a) de la première face principale (2) ; et
- **que** la sous-surface principale (46a) de chacune des troisième et quatrième surfaces de guidage de copeaux (43, 44) forme un angle (α) de 20 à 45°, de préférence de 35 à 45°, avec ladite surface de butée (5b) de la seconde face principale (3).

9. Plaquette de coupe double face selon la revendication 8, **caractérisée en ce que** le plan longitudinal (LP) s'étend en travers de la sous-surface principale (46a) de chaque surface de guidage de copeaux desdites première, deuxième, troisième et quatrième surfaces de guidage de copeaux (41, 42, 43, 44).

10. Plaquette de coupe double face selon l'une quelconque des revendications 7 à 9, **caractérisée en ce que** la partie d'arête centrale (45a) de la première arête de chaque surface de guidage de copeaux desdites première, deuxième, troisième et quatrième surfaces de guidage de copeaux (41, 42, 43, 44) s'étend essentiellement parallèlement à la partie d'arête centrale (45b) de la seconde arête de la même surface de guidage de copeaux.

11. Plaquette de coupe double face selon l'une quelconque des revendications 1 à 10, **caractérisée en ce :**
- **que** la seconde arête (41b) de la première surface de guidage de copeaux (41) et la seconde arête (44b) de la quatrième surface de guidage de copeaux (44) sont situées sur des côtés opposés du plan médian (MP) ; et
- **que** la seconde arête (42b) de la deuxième surface de guidage de copeaux (42) et la seconde arête (43b) de la troisième surface de guidage de copeaux (43) sont situées sur des côtés opposés du plan médian (MP).

12. Plaquette de coupe double face selon l'une quelconque des revendications 1 à 11, **caractérisée en ce :**
- **que** la deuxième arête de coupe de coin (22) est reliée à la première surface de guidage de copeaux (41) au niveau de ladite première extrémité (41c) de la première surface de guidage de copeaux ;
- **que** la quatrième arête de coupe de coin (24) est reliée à la deuxième surface de guidage de copeaux (42) au niveau de ladite première extrémité (42c) de la deuxième surface de guidage de copeaux ;
- **que** la sixième arête de coupe de coin (26) est reliée à la troisième surface de guidage de copeaux (43) au niveau de ladite première extrémité (43c) de la troisième surface de guidage de copeaux ; et
- **que** la huitième arête de coupe de coin (28) est reliée à la quatrième surface de guidage de copeaux (44) au niveau de ladite première extrémité (44c) de la quatrième surface de guidage de copeaux.

13. Plaquette de coupe double face selon l'une quelconque des revendications 1 à 12, **caractérisée en ce que** la plaquette de coupe (1) est dotée d'un trou traversant (6), lequel s'étend centralement à travers la plaquette de coupe entre les première et seconde faces principales (2, 3), où un axe central du trou traversant (6) coïncide avec l'axe central (C) de la plaquette de coupe (1).

14. Plaquette de coupe double face selon l'une quelconque des revendications 1 à 13, **caractérisée en ce :**
- **que** la première arête de coupe principale (31) est inclinée par rapport au plan médian (MP) de telle sorte qu'une première extrémité (31a) de la première arête de coupe principale faisant face à la première arête de coupe de coin (21) est plus éloignée du plan médian (MP) qu'une seconde extrémité opposée (31b) de la première arête de coupe principale faisant face à la deuxième arête de coupe de coin (22) ;
- **que** la deuxième arête de coupe principale (32) est inclinée par rapport au plan médian (MP) de telle sorte qu'une première extrémité (32a) de la deuxième arête de coupe principale faisant face à la troisième arête de coupe de coin (23) est plus éloignée du plan médian (MP) qu'une seconde extrémité opposée (32b) de la deuxième arête de coupe principale faisant face à la quatrième arête de coupe de coin (24) ;
- **que** la troisième arête de coupe principale (33) est inclinée par rapport au plan médian (MP) de telle sorte qu'une première extrémité (33a) de la troisième arête de coupe principale faisant face à la cinquième arête de coupe de coin (25) est plus éloignée du plan médian (MP) qu'une seconde extrémité opposée (33b) de la troisième arête de coupe principale faisant face à la sixième arête de coupe de coin (26) ; et
- **que** la quatrième arête de coupe principale (34) est inclinée par rapport au plan médian (MP) de telle sorte qu'une première extrémité (34a) de la quatrième arête de coupe principale faisant face à la septième arête de coupe de coin (27) est plus éloignée du plan médian (MP) qu'une seconde extrémité opposée (34b) de la quatrième arête de coupe principale faisant face à la huitième arête de coupe de coin (28).

15. Plaquette de coupe double face selon la revendication 14, **caractérisée en ce que** chaque arête de coupe principale desdites première, deuxième, troisième et quatrième arêtes de coupe principales (31, 32, 33, 34) forme un angle (β) inférieur à 6° par rapport au plan médian (MP).

16. Fraise hélicoïdale comprenant une pluralité de plaquettes de coupe double face (1) selon l'une quelconque des revendications 1 à 15.

17. Fraise hélicoïdale selon la revendication 16, **caractérisée en ce :**
- **que** la fraise hélicoïdale comprend un corps d'outil allongé (51) présentant une extrémité arrière (51b) et une extrémité avant opposée (51a), où un axe longitudinal central (53) du corps d'outil (51) s'étend entre l'extrémité arrière (51b) et l'extrémité avant (51a) du corps d'outil et où le corps d'outil (51) comprend :
• une partie arrière (54) située au niveau de l'extrémité arrière (51b) du corps d'outil (51) et configurée pour être attachée à une machine,
• une surface avant (55) située au niveau de l'extrémité avant (51a) du corps d'outil (51), et
• deux goujures à copeaux ou plus (57) formées dans une surface périphérique (56) du corps d'outil (51) et s'étendant les unes le long des autres le long d'une partie du corps d'outil (51) depuis la surface avant (55) vers la partie arrière (54), les goujures à copeaux (57) étant séparées les unes des autres dans la direction circonférentielle du corps d'outil (51), où chaque goujure à copeaux desdites deux goujures à copeaux ou plus (57) s'étend selon une trajectoire incurvée hélicoïdalement le long de la partie associée du corps d'outil et présente une face avant (57a) et une face arrière opposée (57b), et où chaque goujure à copeaux desdites deux goujures à copeaux ou plus (57) est dotée d'un réseau de deux sièges de plaquette (60) ou plus situés les uns après les autres le long de la face arrière (57b) de chaque goujure à copeaux (57) de telle sorte que les sièges de plaquette (60) dans le même réseau de sièges de plaquette sont espacés les uns des autres dans une direction circonférentielle du corps d'outil (51) d'un manière échelonnée ;
- **que** les plaquettes de coupe double face (1) selon l'une quelconque des revendications 1 à 15 sont montées de manière amovible dans un siège respectif parmi les sièges de plaquette (60) dans ledit réseau de sièges de plaquette, chaque plaquette de coupe (1) étant montée dans le siège de plaquette associé (60) avec la surface de butée (5a, 5b) sur l'une des première et seconde faces principales (2, 3) de la plaquette de coupe servant de surface de butée tangentielle active et butant contre une surface de support tangentielle correspondante (63) dans le siège de plaquette, avec l'une des arêtes de coupe principales (31, 32, 33, 34) au niveau de l'autre des première et seconde faces principales (2, 3) de la plaquette de coupe servant d'arête de coupe principale active et s'étendant le long d'une partie de la surface périphérique (56) du corps d'outil (51), avec l'une des troisième et quatrième faces latérales principales (13, 14) de la plaquette de coupe incluse dans une section d'extrémité orientée vers l'avant (8a) de la plaquette de coupe qui fait face à l'extrémité avant (51a) du corps d'outil (51) et avec l'autre des troisième et quatrième faces latérales principales (13, 14) de la plaquette de coupe incluse dans une section d'extrémité orientée vers l'arrière (8b) de la plaquette de coupe qui fait face à l'extrémité arrière (51b) du corps d'outil (51) ; et
- **que** les sièges de plaquette (60) dans ledit réseau de sièges de plaquette sont positionnés les uns par rapport aux autres de sorte que la section d'extrémité orientée vers l'arrière (8b) d'une plaquette de coupe montée dans un siège de plaquette (60) qui est situé axialement à l'avant d'un siège de plaquette adjacent (60) dans le même réseau de sièges de plaquette et la section d'extrémité orientée vers l'avant (8a) d'une plaquette de coupe (1) montée dans ce siège de plaquette adjacent (60) se chevauchent au moins partiellement.

18. Fraise hélicoïdale selon la revendication 17, **caractérisée en ce que** chaque goujure à copeaux (57) parmi lesdites deux goujures à copeaux ou plus est agencée dans le corps d'outil (51) avec un angle d'hélice positif, où les sièges de plaquette (60) dans ledit réseau de sièges de plaquette sont positionnés les uns par rapport aux autres de sorte qu'un siège de plaquette (60) qui est situé axialement à l'avant d'un siège de plaquette adjacent (60) dans le même réseau de sièges de plaquette est également situé en rotation à l'avant de ce siège de plaquette adjacent (60) lorsqu'il est observé dans un sens de rotation prévu (R) du corps d'outil (51).

19. Fraise hélicoïdale selon la revendication 17 ou 18, **caractérisée en ce que** la face avant (57a) d'au moins une desdites deux goujures à copeaux ou plus (57) est pourvue d'au moins un évidement (66) situé de manière opposée et faisant face au réseau de sièges de plaquette (60) prévus dans la face arrière (57b) de la même goujure à copeaux (57), où une longueur axiale de cet au moins un évidement (66) est de préférence supérieure à 50 % d'une longueur d'une desdites première, deuxième, troisième et quatrième arêtes de coupe principales (31 à 34) desdites plaquettes de coupe (1), de façon davantage préférée supérieure à cette longueur.
